# EUROPEAN PATENT SPECIFICATION

(11) **EP 3 021 611 B1**
(45) Date of publication and mention of the grant of the patent: **06.12.2017**
(21) Application number: 13891166.4
(22) Date of filing: 07.08.2013
(51) Int. Cl.: H04W 24/10, H04W 76/02

(54) **TERMINAL INFORMATION REPORTING METHOD AND RELATED DEVICE**
VERFAHREN ZUR MELDUNG VON ENDGERÄTINFORMATIONEN UND ZUGEHÖRIGE VORRICHTUNG
PROCÉDÉ DE RAPPORT D'INFORMATIONS DE TERMINAL ET DISPOSITIF ASSOCIÉ

(43) Date of publication of application: 18.05.2016
(73) Proprietor: Huawei Technologies Co., Ltd., Longgang District Shenzhen, Guangdong 518129 (CN)
(72) Inventor: ZHANG, Tao, Shenzhen Guangdong 518129 (CN); LIN, Bo, Shenzhen Guangdong 518129 (CN); CHEN, Yanyan, Shenzhen Guangdong 518129 (CN)
(74) Representative: Pfenning, Meinig & Partner mbB
(86) International application number: PCT/CN2013/081010
(87) International publication number: WO 2015/018011

(56) References cited:
- EP-A1- 2 557 889
- EP-A1- 2 621 114
- WO-A1-2011/160284
- CN-A- 101 472 305
- CN-A- 101 610 536
- US-A1- 2011 080 825
- US-A1- 2013 182 563

## Description

### TECHNICAL FIELD

The present invention relates to the field of communications, and in particular, to a terminal information reporting method and a related device.

### BACKGROUND

A measurement report is a message sent by a terminal to a base station, and the message includes a measurement result obtained after the terminal performs measurement according to a configuration of the base station. When a condition for a measurement report is met and lasts for a predetermined time, the measurement report is triggered, and subsequently the terminal sends the triggered measurement report to the base station.

A T310 is a timer maintained by a terminal, and when the terminal determines, by means of measurement, that a channel condition of a serving cell deteriorates to a predetermined extent, the terminal starts the T310. During running of the T310, the terminal basically cannot normally communicate with the serving cell, and may be deemed to be in an interrupted state. The communication between the terminal and serving cell is not restored to a normal state until the terminal reestablishes a connection.

In the prior art, with respect to a timing relationship between a sending moment of a measurement report and a T310, a base station may configure different behavior modes for a terminal. In a behavior mode, with respect to a timing relationship between a sending moment of a measurement report and a T310, the terminal determines, according to the behavior mode, which behavior is to be taken. However, different behaviors may cause different interruption delays to the terminal, where interruption delays caused by some behaviors to the terminal are random; therefore, the base station cannot control quality of service, cannot determine whether a current configuration parameter or a current configuration policy can satisfy predetermined quality of service, and further cannot adjust the current configuration parameter and the current configuration policy to improve the quality of service (Quality Of Service, QoS).
US 2013/0182563A1 discloses a UE that establishes an RRC connection with an eNB in the source cell and performs performs radio link monitoring and measures radio signal strength/quality. The UE detects a possible radio link problem, e.g. link quality is lower than a threshold, and then starts a timer. During the running of the timer, the UE sends a measurement report to the eNB, and waits for the mobility decision from the eNB until the timer expires.

### SUMMARY

The invention is defined by the appended claims.

Embodiments of the present invention provide a terminal information reporting method and a related device, which enables a base station to learn an interruption delay, and therefore can control quality of service according to the interruption delay.

To achieve the foregoing objective, the embodiments of the present invention use the following technical solutions:

According to a first aspect, a terminal information reporting method is provided, where the method includes:
obtaining, by a first terminal, first information, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer; and
sending the first information to a base station.

In a first possible implementation manner of the first aspect, with reference to the first aspect, the sending the first information to a base station specifically includes:
sending the first information to the base station, where the base station determines, according to the interruption delay or according to an interruption delay determined by the first identifier or according to an interruption delay determined by the second identifier, whether a current configuration of the base station can satisfy predetermined quality of service.

In a second possible implementation manner of the first aspect, with reference to the first aspect or the first possible implementation manner of the first aspect, before the obtaining, by a first terminal, first information, the method further includes:
obtaining configuration information of the first terminal, where the configuration information of the first terminal is determined by the base station according to a third identifier reported by a second terminal, the third identifier represents a timing relationship between a moment at which the second terminal triggers or sends a measurement report and the first timer, and
   the configuration information of the first terminal includes at least information about a behavior mode to be configured for the first terminal; and
performing a configuration according to the configuration information of the first terminal; and
if the first information is the interruption delay, the obtaining, by a first terminal, first information specifically includes:
   obtaining the interruption delay according to the behavior mode configured for the first terminal; or
   if the first information is the first identifier, the obtaining, by a first terminal, first information specifically includes:
      obtaining the first identifier according to a pre-stored correspondence between a timing relationship between a moment at which a terminal triggers or sends a measurement report and the first timer and the first identifier; or
      if the first information is the second identifier, the obtaining, by a first terminal, first information specifically includes:
         obtaining the second identifier according to a pre-stored correspondence between a timing relationship between a moment at which a terminal initiates connection reestablishment and the first timer and the second identifier.

In a third possible implementation manner of the first aspect, with reference to the second possible implementation manner of the first aspect, the configuration information of the first terminal is further determined by the base station according to a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

In a fourth possible implementation manner of the first aspect, with reference to the second possible implementation manner of the first aspect or the third possible implementation manner of the first aspect, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

In a fifth possible implementation manner of the first aspect, with reference to the fourth possible implementation manner of the first aspect, the behavior mode to be configured for the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment; or
a fourth behavior mode, including:
   a timer length configured by the first terminal for the first timer is a second timer length; and
   when the first timer expires, the first terminal initiates connection reestablishment.

In a sixth possible implementation manner of the first aspect, with reference to the fifth possible implementation manner of the first aspect, if the behavior mode to be configured for the first terminal is the first behavior mode, the obtaining the interruption delay according to the behavior mode configured for the first terminal specifically includes:
when the first relationship occurs, obtaining that the first timer length of the first timer is the interruption delay; and
when the second relationship or the third relationship occurs, obtaining that the second timer length of the first timer is the interruption delay.

In a seventh possible implementation manner of the first aspect, with reference to the fifth possible implementation manner of the first aspect, if the behavior mode to be configured for the first terminal is the second behavior mode, the obtaining the interruption delay according to the behavior mode configured for the first terminal specifically includes:
when the second relationship occurs, obtaining that a running time length value of the first timer is the interruption delay, where the running time length value of the first timer is a time length between the moment at which the first timer is started and the moment at which the first terminal triggers or sends the measurement report; and
when the first relationship or the third relationship occurs, obtaining that the second timer length of the first timer is the interruption delay.

In an eighth possible implementation manner of the first aspect, with reference to the fifth possible implementation manner of the first aspect, if the behavior mode to be configured for the first terminal is the third behavior mode, the obtaining the interruption delay according to the behavior mode configured for the first terminal specifically includes:
when the first relationship occurs, obtaining that the first timer length of the first timer is the interruption delay;
when the second relationship occurs, obtaining that a running time length value of the first timer is the interruption delay, where the running time length value of the first timer is a time length between the moment at which the first timer is started and the moment at which the first terminal triggers or sends the measurement report; and
when the third relationship occurs, obtaining that the second timer length of the first timer is the interruption delay.

In a ninth possible implementation manner of the first aspect, with reference to the fifth possible implementation manner of the first aspect, if the behavior mode to be configured for the first terminal is the fourth behavior mode, the obtaining the interruption delay according to the behavior mode configured for the first terminal specifically includes:
obtaining that the second timer length of the first timer is the interruption delay.

In a tenth possible implementation manner of the first aspect, with reference to the first aspect to the ninth possible implementation manner of the first aspect, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

According to a second aspect, a terminal information reporting method is provided, where the method includes:
obtaining, by a base station, first information reported by a first terminal, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer; and
determining, according to the first information, whether a current configuration of the base station can satisfy predetermined quality of service.

In a first possible implementation manner of the second aspect, with reference to the second aspect, the determining, according to the first information, whether a current configuration of the base station can satisfy predetermined quality of service specifically includes:
if the first information is the interruption delay, determining, according to the interruption delay, whether the current configuration of the base station can satisfy the predetermined quality of service;
if the first information is the first identifier, obtaining an interruption delay corresponding to the first identifier according to a pre-stored correspondence between the first identifier and the interruption delay; and
determining, according to the interruption delay corresponding to the first identifier, whether the current configuration of the base station can satisfy the predetermined quality of service; or
if the first information is the second identifier, obtaining an interruption delay corresponding to the second identifier according to a pre-stored correspondence between the second identifier and the interruption delay; and
determining, according to the interruption delay corresponding to the second identifier, whether the current configuration of the base station can satisfy the predetermined quality of service.

In a second possible implementation manner of the second aspect, with reference to the second aspect or the first possible implementation manner of the second aspect, before the obtaining, by a base station, first information reported by a first terminal, the method further includes:
obtaining at least one type of third identifier, where the third identifier represents a timing relationship between a moment at which a second terminal triggers or sends a measurement report and the first timer;
determining a preferred behavior mode corresponding to the first terminal according to the at least one type of third identifier; and
sending, if the base station allows the preferred behavior mode to be configured, information about the preferred behavior mode to the first terminal, so that the first terminal configures the preferred behavior mode; or
sending, if the base station does not allow the preferred behavior mode to be configured, information about a behavior mode that the base station allows to be configured and a first parameter to the first terminal, so that the first terminal performs a configuration according to the information about the behavior mode that the base station allows to be configured and the first parameter, where the first parameter is a parameter enabling the behavior mode that the base station allows to be configured to be the preferred behavior mode of the first terminal.

In a third possible implementation manner of the second aspect, with reference to the second possible implementation manner of the second aspect, the determining a preferred behavior mode corresponding to the first terminal according to the at least one type of third identifier specifically includes:
counting a quantity of third identifiers of each type of the at least one type of third identifier;
determining a fourth identifier according to the quantity of third identifiers of each type of the at least one type of identifier, where the fourth identifier is a type of identifier with a largest quantity of identifiers among the at least one type of third identifier; and
determining a preferred behavior mode corresponding to the fourth identifier according to the fourth identifier, and determine that the preferred behavior mode is the preferred behavior mode corresponding to the first terminal.

In a fourth possible implementation manner of the second aspect, with reference to the third possible implementation manner of the second aspect, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

In a fifth possible implementation manner of the second aspect, with reference to the fourth possible implementation manner of the second aspect, the preferred behavior mode corresponding to the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment; or
a fourth behavior mode, including:
   a timer length configured by the first terminal for the first timer is a second timer length; and
   when the first timer expires, the first terminal initiates connection reestablishment.

In a sixth possible implementation manner of the second aspect, with reference to the fifth possible implementation manner of the second aspect, the fourth identifier specifically represents the first relationship;
the determining a preferred behavior mode corresponding to the fourth identifier according to the fourth identifier specifically includes:
determining, according to the fourth identifier, that the preferred behavior mode corresponding to the fourth identifier is the first behavior mode or the third behavior mode; and
the sending, if the base station allows the preferred behavior mode to be configured, information about the preferred behavior mode to the first terminal, so that the first terminal configures the preferred behavior mode specifically includes:
   sending, if the base station allows the first behavior mode to be configured, information about the first behavior mode to the first terminal, so that the first terminal configures the first behavior mode; or
   sending, if the base station allows the third behavior mode to be configured, information about the third behavior mode to the first terminal, so that the first terminal configures the third behavior mode.

In a seventh possible implementation manner of the second aspect, with reference to the sixth possible implementation manner of the second aspect, the sending, if the base station does not allow the preferred behavior mode to be configured, information about a behavior mode that the base station allows to be configured and a first parameter, so that the first terminal performs a configuration according to the information about the behavior mode that the base station allows to be configured and the first parameter specifically includes:
sending, if the base station does not allow the first behavior mode to be configured, and does not allow the third behavior mode to be configured, but allows the fourth behavior mode and the second behavior mode to be configured, information about the fourth behavior mode and the first parameter to the first terminal, so that the first terminal performs a configuration according to the information about the fourth behavior mode and the first parameter;
   or
sending information about the second behavior mode and the first parameter to the first terminal, so that the first terminal performs a configuration according to the information about the second behavior mode and the first parameter.

In an eighth possible implementation manner of the second aspect, with reference to the fifth possible implementation manner of the second aspect, the fourth identifier specifically represents the second relationship;
the determining a preferred behavior mode corresponding to the fourth identifier according to the fourth identifier specifically includes:
determining, according to the fourth identifier, that the preferred behavior mode corresponding to the fourth identifier is the second behavior mode or the third behavior mode; and
the sending, if the base station allows the preferred behavior mode to be configured, information about the preferred behavior mode to the first terminal, so that the first terminal configures the preferred behavior mode specifically includes:
   sending, if the base station allows the second behavior mode to be configured, information about the second behavior mode to the first terminal, so that the first terminal configures the second behavior mode; or
   sending, if the base station allows the third behavior mode to be configured, information about the third behavior mode to the first terminal, so that the first terminal configures the third behavior mode.

In a ninth possible implementation manner of the second aspect, with reference to the eighth possible implementation manner of the second aspect, the sending, if the base station does not allow the preferred behavior mode to be configured, information about a behavior mode that the base station allows to be configured and a first parameter to the first terminal, so that the first terminal performs a configuration according to the behavior mode that the base station allows to be configured and the first parameter specifically includes:
sending, if the base station does not allow the second behavior mode to be configured, and does not allow the third behavior mode to be configured, but allows the fourth behavior mode and the first behavior mode to be configured, information about the fourth behavior mode and the first parameter to the first terminal, so that the first terminal performs a configuration according to the information about the fourth behavior mode and the first parameter;
   or
sending information about the first behavior mode and the first parameter to the first terminal, so that the first terminal performs a configuration according to the information about the first behavior mode and the first parameter.

In a tenth possible implementation manner of the second aspect, with reference to the fifth possible implementation manner of the second aspect, the fourth identifier specifically represents the third relationship;
the determining a preferred behavior mode corresponding to the fourth identifier according to the fourth identifier specifically includes:
determining, if a quantity of fourth identifiers is not greater than a sum of a quantity of fifth identifiers and a quantity of sixth identifiers, that the preferred behavior mode corresponding to the fourth identifier is the third behavior mode, where one identifier of the fifth identifier and the sixth identifier is corresponding to the second relationship, and the other identifier is corresponding to the first relationship; and
the sending, if the base station allows the preferred behavior mode to be configured, information about the preferred behavior mode to the first terminal, so that the first terminal configures the preferred behavior mode specifically includes:
   sending, if the base station allows the third behavior mode to be configured, information about the third behavior mode to the first terminal, so that the first terminal configures the third behavior mode.

In an eleventh possible implementation manner of the second aspect, with reference to the tenth possible implementation manner of the second aspect, the sending, if the base station does not allow the preferred behavior mode to be configured, information about a behavior mode that the base station allows to be configured and a first parameter to the first terminal, so that the first terminal performs a configuration according to the information about the behavior mode that the base station allows to be configured and the first parameter specifically includes:
sending, if the base station does not allow the third behavior mode to be configured, but allows the fourth behavior mode and the first behavior mode to be configured, information about the fourth behavior mode and the first parameter to the first terminal, so that the first terminal performs a configuration according to the information about the fourth behavior mode and the first parameter;
   or
sending information about the first behavior mode and the first parameter to the first terminal, so that the first terminal performs a configuration according to the information about the first behavior mode and the first parameter; or
sending, if the base station does not allow the third behavior mode to be configured, but allows the fourth behavior mode and the second behavior mode to be configured, information about the fourth behavior mode and the first parameter to the first terminal, so that the first terminal performs a configuration according to the information about the fourth behavior mode and the first parameter;
   or
sending information about the second behavior mode and the first parameter to the first terminal, so that the first terminal performs a configuration according to the information about the second behavior mode and the first parameter.

In a twelfth possible implementation manner of the second aspect, with reference to the second possible implementation manner of the second aspect to the eleventh possible implementation manner of the second aspect, before the determining a preferred behavior mode corresponding to the first terminal according to the at least one type of identifier, the method further includes:
obtaining a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires; and
the first parameter specifically includes:
   a parameter determined according to the first time length or the second time length.

In a thirteenth possible implementation manner of the second aspect, with reference to the second aspect to the twelfth possible implementation manner of the second aspect, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

According to a third aspect, a first terminal is provided, where the first terminal includes an obtaining unit and a sending unit;
the obtaining unit is configured to obtain first information, where the first information includes an interruption delay or a first identifier or a second identifier, where the first identifier represents a timing relationship between a moment at which the first terminal triggers or sends a measurement report and a a first timer, and the second identifier represents a timing relationship between a moment at which the first terminal initiates connection reestablishment and the first timer; and
the sending unit is configured to send the first information obtained by the obtaining unit to a base station.

In a first possible implementation manner of the third aspect, with reference to the third aspect, the sending unit is specifically configured to:
send the first information to the base station, where the base station determines, according to the interruption delay or according to an interruption delay determined by the first identifier or according to an interruption delay determined by the second identifier, whether a current configuration of the base station can satisfy predetermined quality of service.

In a second possible implementation manner of the third aspect, with reference to the third aspect or the first possible implementation manner of the third aspect, the first terminal further includes a configuration unit;
the obtaining unit is further configured to:
obtain configuration information of the first terminal before obtaining the first information, where the configuration information of the first terminal is determined by the base station according to a third identifier reported by a second terminal, the third identifier represents a timing relationship between a moment at which the second terminal triggers or sends a measurement report and the first timer, and the configuration information of the first terminal includes at least information about a behavior mode to be configured for the first terminal;
the configuration unit is configured to perform a configuration according to the configuration information of the first terminal obtained by the obtaining unit; and
the obtaining unit is specifically configured to:
   if the first information is the interruption delay, obtain the interruption delay according to the behavior mode configured for the first terminal; or
   the obtaining unit is further specifically configured to:
      if the first information is the first identifier, obtain the first identifier according to a pre-stored correspondence between a timing relationship between a moment at which a terminal triggers or sends a measurement report and the first timer and the first identifier; or
      the obtaining unit is further specifically configured to:
         if the first information is the second identifier, obtain the second identifier according to a pre-stored correspondence between a timing relationship between a moment at which a terminal initiates connection reestablishment and the first timer and the second identifier.

In a third possible implementation manner of the third aspect, with reference to the second possible implementation manner of the third aspect, the configuration information of the first terminal is further determined by the base station according to a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

In a fourth possible implementation manner of the third aspect, with reference to the second possible implementation manner of the third aspect or the third possible implementation manner of the third aspect, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

In a fifth possible implementation manner of the third aspect, with reference to the fourth possible implementation manner of the third aspect, the behavior mode to be configured for the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs, and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment;
   or
a fourth behavior mode, including:
   a timer length configured by the first terminal for the first timer is a second timer length; and
   when the first timer expires, the first terminal initiates connection reestablishment.

In a sixth possible implementation manner of the third aspect, with reference to the fifth possible implementation manner of the third aspect, if the behavior mode to be configured for the first terminal is the first behavior mode, the obtaining unit is further specifically configured to:
when the first relationship occurs, obtain that the first timer length of the first timer is the interruption delay; and
when the second relationship or the third relationship occurs, obtain that the second timer length of the first timer is the interruption delay.

In a seventh possible implementation manner of the third aspect, with reference to the fifth possible implementation manner of the third aspect, if the behavior mode to be configured for the first terminal is the second behavior mode, the obtaining unit is further specifically configured to:
when the second relationship occurs, obtain that a running time length value of the first timer is the interruption delay, where the running time length value of the first timer is a time length between the moment at which the first timer is started and the moment at which the first terminal triggers or sends the measurement report; and
when the first relationship or the third relationship occurs, obtain that the second timer length of the first timer is the interruption delay.

In an eighth possible implementation manner of the third aspect, with reference to the fifth possible implementation manner of the third aspect, if the behavior mode to be configured for the first terminal is the third behavior mode, the obtaining unit is further specifically configured to:
when the first relationship occurs, obtain that the first timer length of the first timer is the interruption delay;
when the second relationship occurs, obtain that a running time length value of the first timer is the interruption delay, where the running time length value of the first timer is a time length between the moment at which the first timer is started and the moment at which the first terminal triggers or sends the measurement report; and
when the third relationship occurs, obtain that the second timer length of the first timer is the interruption delay.

In a ninth possible implementation manner of the third aspect, with reference to the fifth possible implementation manner of the third aspect, if the behavior mode to be configured for the first terminal is the fourth behavior mode, the obtaining unit is further specifically configured to:
obtain that the second timer length of the first timer is the interruption delay.

In a tenth possible implementation manner of the third aspect, with reference to the third aspect to the ninth possible implementation manner of the third aspect, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

According to a fourth aspect, a base station is provided, where the base station includes an obtaining unit and a determining unit;
the obtaining unit is configured to obtain first information reported by a first terminal, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer; and
the determining unit is configured to determine, according to the first information obtained by the obtaining unit, whether a current configuration of the base station can satisfy predetermined quality of service.

In a first possible implementation manner of the fourth aspect, with reference to the fourth aspect, the determining unit is specifically configured to:
if the first information is the interruption delay, determine, according to the interruption delay, whether the current configuration of the base station can satisfy the predetermined quality of service; or
if the first information is the first identifier, obtain an interruption delay corresponding to the first identifier according to a pre-stored correspondence between the first identifier and the interruption delay; and
determine, according to the interruption delay corresponding to the first identifier, whether the current configuration of the base station can satisfy the predetermined quality of service; or
if the first information is the second identifier, obtain an interruption delay corresponding to the second identifier according to a pre-stored correspondence between the second identifier and the interruption delay; and
determine, according to the interruption delay corresponding to the second identifier, whether the current configuration of the base station can satisfy the predetermined quality of service.

In a second possible implementation manner of the fourth aspect, with reference to the fourth aspect or the first possible implementation manner of the fourth aspect, the base station further includes a sending unit;
the obtaining unit is further configured to: before obtaining the first information reported by the first terminal, obtain at least one type of third identifier, where the third identifier represents a timing relationship between a moment at which a second terminal triggers or sends a measurement report and the first timer;
the determining unit is further configured to determine a preferred behavior mode corresponding to the first terminal according to the at least one type of third identifier obtained by the obtaining unit; and
the sending unit is configured to send, if the base station allows the preferred behavior mode to be configured, information about the preferred behavior mode determined by the determining unit to the first terminal, so that the first terminal configures the preferred behavior mode; or
the sending unit is further configured to send, if the base station does not allow the preferred behavior mode to be configured, information about a behavior mode that the base station allows to be configured and a first parameter to the first terminal, so that the first terminal performs a configuration according to the information about the behavior mode that the base station allows to be configured and the first parameter, where the first parameter is a parameter enabling the behavior mode that the base station allows to be configured to be the preferred behavior mode of the first terminal.

In a third possible implementation manner of the fourth aspect, with reference to the second possible implementation manner of the fourth aspect, the determining unit is specifically configured to:
count a quantity of third identifiers of each type of the at least one type of third identifier;
determine a fourth identifier according to the quantity of third identifiers of each type of the at least one type of identifier, where the fourth identifier is a type of identifier with a largest quantity of identifiers among the at least one type of third identifier; and
determine a preferred behavior mode corresponding to the fourth identifier according to the fourth identifier, and determine that the preferred behavior mode is the preferred behavior mode corresponding to the first terminal.

In a fourth possible implementation manner of the fourth aspect, with reference to the third possible implementation manner of the fourth aspect, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

In a fifth possible implementation manner of the fourth aspect, with reference to the fourth possible implementation manner of the fourth aspect, the preferred behavior mode corresponding to the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment; or
a fourth behavior mode, including:
   a timer length configured by the first terminal for the first timer is a second timer length; and
   when the first timer expires, the first terminal initiates connection reestablishment.

In a sixth possible implementation manner of the fourth aspect, with reference to the fifth possible implementation manner of the fourth aspect, the fourth identifier specifically represents the first relationship;
the determining unit is specifically configured to:
determine, according to the fourth identifier, that the preferred behavior mode corresponding to the fourth identifier is the first behavior mode or the third behavior mode; and
the sending unit is specifically configured to:
   if the base station allows the first behavior mode to be configured, send information about the first behavior mode to the first terminal, so that the first terminal configures the first behavior mode; or
   if the base station allows the third behavior mode to be configured, send information about the third behavior mode to the first terminal, so that the first terminal configures the third behavior mode.

In a seventh possible implementation manner of the fourth aspect, with reference to the sixth possible implementation manner of the fourth aspect, the sending unit is further specifically configured to:
if the base station does not allow the first behavior mode to be configured, and does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
   or
send information about the second behavior mode and the first parameter to the first terminal, so that the first terminal performs a configuration according to the information about the second behavior mode and the first parameter.

In an eighth possible implementation manner of the fourth aspect, with reference to the fifth possible implementation manner of the fourth aspect, the fourth identifier specifically represents the second relationship;
the determining unit is specifically configured to:
determine, according to the fourth identifier, that the preferred behavior mode corresponding to the fourth identifier is the second behavior mode or the third behavior mode; and
the sending unit is specifically configured to:
   if the base station allows the second behavior mode to be configured, send information about the second behavior mode to the first terminal, so that the first terminal configures the second behavior mode; or
   if the base station allows the third behavior mode to be configured, send information about the third behavior mode to the first terminal, so that the first terminal configures the third behavior mode.

In a ninth possible implementation manner of the fourth aspect, with reference to the eighth possible implementation manner of the fourth aspect, the sending unit is further specifically configured to:
if the base station does not allow the second behavior mode to be configured, and does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter.

In a tenth possible implementation manner of the fourth aspect, with reference to the fifth possible implementation manner of the fourth aspect, the fourth identifier specifically represents the third relationship;
the determining unit is specifically configured to:
if a quantity of fourth identifiers is not greater than a sum of a quantity of fifth identifiers and a quantity of sixth identifiers, determine that the preferred behavior mode corresponding to the fourth identifier is the third behavior mode, where one identifier of the fifth identifier and the sixth identifier is corresponding to the second relationship, and the other identifier is corresponding to the first relationship; and
the sending unit is specifically configured to:
   if the base station allows the third behavior mode to be configured, send information about the third behavior mode to the first terminal, so that the first terminal configures the third behavior mode.

In an eleventh possible implementation manner of the fourth aspect, with reference to the tenth possible implementation manner of the fourth aspect, the sending unit is further specifically configured to:
if the base station does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter;
or the sending unit is further specifically configured to:
   if the base station does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
   or
send information about the second behavior mode and the first parameter to the first terminal, so that the first terminal performs a configuration according to the information about the second behavior mode and the first parameter.

In a twelfth possible implementation manner of the fourth aspect, with reference to the second possible implementation manner of the fourth aspect to the eleventh possible implementation manner of the fourth aspect, the obtaining unit is further configured to:
before the determining unit determines the preferred behavior mode corresponding to the first terminal according to the at least one type of identifier, obtain a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires; and
the first parameter specifically includes:
   a parameter determined according to the first time length or the second time length.

In a thirteenth possible implementation manner of the fourth aspect, with reference to the fourth aspect to the twelfth possible implementation manner of the fourth aspect, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

According to a fifth aspect, a first terminal is provided, where the first terminal includes a processor and a sender;
the processor is configured to obtain first information, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer; and
the sender is configured to send the first information obtained by the processor to a base station.

In a first possible implementation manner of the fifth aspect, with reference to the fifth aspect, the sender is specifically configured to:
send the first information to the base station, where the base station determines, according to the interruption delay or according to an interruption delay determined by the first identifier or according to an interruption delay determined by the second identifier, whether a current configuration of the base station can satisfy predetermined quality of service.

In a second possible implementation manner of the fifth aspect, with reference to the fifth aspect or the first possible implementation manner of the fifth aspect, the processor is further specifically configured to:
obtain configuration information of the first terminal before obtaining the first information, where the configuration information of the first terminal is determined by the base station according to a third identifier reported by a second terminal, the third identifier represents a timing relationship between a moment at which the second terminal triggers or sends a measurement report and the first timer, and the configuration information of the first terminal includes at least information about a behavior mode to be configured for the first terminal;
the processor is further configured to:
   perform a configuration according to the obtained configuration information of the first terminal; and
the processor is further specifically configured to:
   if the first information is the interruption delay, obtain the interruption delay according to the behavior mode configured for the first terminal; or
the processor is further specifically configured to:
   if the first information is the first identifier, obtain the first identifier according to a pre-stored correspondence between a timing relationship between a moment at which a terminal triggers or sends a measurement report and the first timer and the first identifier; or
the processor is further specifically configured to:
   if the first information is the second identifier, obtain the second identifier according to a pre-stored correspondence between a timing relationship between a moment at which a terminal initiates connection reestablishment and the first timer and the second identifier.

In a third possible implementation manner of the fifth aspect, with reference to the second possible implementation manner of the fifth aspect, the configuration information of the first terminal is further determined by the base station according to a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

In a fourth possible implementation manner of the fifth aspect, with reference to the second possible implementation manner of the fifth aspect or the third possible implementation manner of the fifth aspect, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

In a fifth possible implementation manner of the fifth aspect, with reference to the fourth possible implementation manner of the fifth aspect, the behavior mode to be configured for the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment; or
a fourth behavior mode, including:
   a timer length configured by the first terminal for the first timer is a second timer length; and
   when the first timer expires, the first terminal initiates connection reestablishment.

In a sixth possible implementation manner of the fifth aspect, with reference to the fifth possible implementation manner of the fifth aspect, if the behavior mode to be configured for the first terminal is the first behavior mode, the processor is further specifically configured to:
when the first relationship occurs, obtain that the first timer length of the first timer is the interruption delay; and
when the second relationship or the third relationship occurs, obtain that the second timer length of the first timer is the interruption delay.

In a seventh possible implementation manner of the fifth aspect, with reference to the fifth possible implementation manner of the fifth aspect, if the behavior mode to be configured for the first terminal is the second behavior mode, the processor is further specifically configured to:
when the second relationship occurs, obtain that a running time length value of the first timer is the interruption delay, where the running time length value of the first timer is a time length between the moment at which the first timer is started and the moment at which the first terminal triggers or sends the measurement report; and
when the first relationship or the third relationship occurs, obtain that the second timer length of the first timer is the interruption delay.

In an eighth possible implementation manner of the fifth aspect, with reference to the fifth possible implementation manner of the fifth aspect, if the behavior mode to be configured for the first terminal is the third behavior mode, the processor is further specifically configured to:
when the first relationship occurs, obtain that the first timer length of the first timer is the interruption delay;
when the second relationship occurs, obtain that a running time length value of the first timer is the interruption delay, where the running time length value of the first timer is a time length between the moment at which the first timer is started and the moment at which the first terminal triggers or sends the measurement report; and
when the third relationship occurs, obtain that the second timer length of the first timer is the interruption delay.

In a ninth possible implementation manner of the fifth aspect, with reference to the fifth possible implementation manner of the fifth aspect, if the behavior mode to be configured for the first terminal is the fourth behavior mode, the processor is further specifically configured to:
obtain that the second timer length of the first timer is the interruption delay.

In a tenth possible implementation manner of the fifth aspect, with reference to the fifth aspect to the ninth possible implementation manner of the fifth aspect, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

According to a sixth aspect, a base station is provided, where the base station includes a processor and a memory;
the processor is configured to obtain first information reported by a first terminal, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer;
the memory is configured to store the first information; and
the processor is further configured to determine, according to the first information, whether a current configuration of the base station can satisfy predetermined quality of service.

In a first possible implementation manner of the sixth aspect, with reference to the sixth aspect, the processor is specifically configured to:
if the first information is the interruption delay, determine, according to the interruption delay, whether the current configuration of the base station can satisfy the predetermined quality of service; or
the memory is further configured to store a correspondence between the first identifier and the interruption delay; and
the processor is further specifically configured to:
   if the first information is the first identifier, obtain the interruption delay corresponding to the first identifier according to the pre-stored correspondence between the first identifier and the interruption delay; and
   determine, according to the interruption delay corresponding to the first identifier, whether the current configuration of the base station can satisfy the predetermined quality of service; or
   the memory is further configured to store a correspondence between the second identifier and the interruption delay; and
   the processor is further specifically configured to:
      if the first information is the second identifier, obtain the interruption delay corresponding to the second identifier according to the pre-stored correspondence between the second identifier and the interruption delay; and
      determine, according to the interruption delay corresponding to the second identifier, whether the current configuration of the base station can satisfy the predetermined quality of service.

In a second possible implementation manner of the sixth aspect, with reference to the sixth aspect or the first possible implementation manner of the sixth aspect, the base station further includes a sender;
the processor is further configured to: before obtaining the first information reported by the first terminal, obtain at least one type of third identifier, where the third identifier represents a timing relationship between a moment at which a second terminal triggers or sends a measurement report and the first timer;
the processor is further configured to determine a preferred behavior mode corresponding to the first terminal according to the at least one type of obtained third identifier; and
the sender is configured to send, if the base station allows the preferred behavior mode to be configured, information about the preferred behavior mode determined by the determining unit to the first terminal, so that the first terminal configures the preferred behavior mode; or
the sender is further configured to send, if the base station does not allow the preferred behavior mode to be configured, information about a behavior mode that the base station allows to be configured and a first parameter to the first terminal, so that the first terminal performs a configuration according to the information about the behavior mode that the base station allows to be configured and the first parameter, where the first parameter is a parameter enabling the behavior mode that the base station allows to be configured to be the preferred behavior mode of the first terminal.

In a third possible implementation manner of the sixth aspect, with reference to the second possible implementation manner of the sixth aspect, the processor is specifically configured to:
count a quantity of third identifiers of each type of the at least one type of third identifier;
determine a fourth identifier according to the quantity of third identifiers of each type of the at least one type of identifier, where the fourth identifier is a type of identifier with a largest quantity of identifiers among the at least one type of third identifier; and
determine a preferred behavior mode corresponding to the fourth identifier according to the fourth identifier, and determine that the preferred behavior mode is the preferred behavior mode corresponding to the first terminal.

In a fourth possible implementation manner of the sixth aspect, with reference to the third possible implementation manner of the sixth aspect, the timing relationship between the moment at which the first/second terminal triggers or sends the measurement report and of the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

In a fifth possible implementation manner of the sixth aspect, with reference to the fourth possible implementation manner of the sixth aspect, the preferred behavior mode corresponding to the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment; or
a fourth behavior mode, including:
   a timer length configured by the first terminal for the first timer is a second timer length; and
   when the first timer expires, the first terminal initiates connection reestablishment.

In a sixth possible implementation manner of the sixth aspect, with reference to the fifth possible implementation manner of the sixth aspect, the fourth identifier specifically represents the first relationship;
the processor is specifically configured to:
determine, according to the fourth identifier, that the preferred behavior mode corresponding to the fourth identifier is the first behavior mode or the third behavior mode; and
the sender is specifically configured to:
   if the base station allows the first behavior mode to be configured, send information about the first behavior mode to the first terminal, so that the first terminal configures the first behavior mode; or
   if the base station allows the third behavior mode to be configured, send information about the third behavior mode to the first terminal, so that the first terminal configures the third behavior mode.

In a seventh possible implementation manner of the sixth aspect, with reference to the sixth possible implementation manner of the sixth aspect, the sender is further specifically configured to:
if the base station does not allow the first behavior mode to be configured, and does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
   or
send information about the second behavior mode and the first parameter to the first terminal, so that the first terminal performs a configuration according to the information about the second behavior mode and the first parameter.

In an eighth possible implementation manner of the sixth aspect, with reference to the fifth possible implementation manner of the sixth aspect, the fourth identifier specifically represents the second relationship;
the processor is specifically configured to:
determine, according to the fourth identifier, that the preferred behavior mode corresponding to the fourth identifier is the second behavior mode or the third behavior mode; and
the sender is specifically configured to:
   if the base station allows the second behavior mode to be configured, send information about the second behavior mode to the first terminal, so that the first terminal configures the second behavior mode; or
   if the base station allows the third behavior mode to be configured, send information about the third behavior mode to the first terminal, so that the first terminal configures the third behavior mode.

In a ninth possible implementation manner of the sixth aspect, with reference to the eighth possible implementation manner of the sixth aspect, the sender is further specifically configured to:
if the base station does not allow the second behavior mode to be configured, and does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter.

In a tenth possible implementation manner of the sixth aspect, with reference to the fifth possible implementation manner of the sixth aspect, the fourth identifier specifically represents the third relationship;
the processor is specifically configured to:
if a quantity of fourth identifiers is not greater than a sum of a quantity of fifth identifiers and a quantity of sixth identifiers, determine that the preferred behavior mode corresponding to the fourth identifier is the third behavior mode, where one identifier of the fifth identifier and the sixth identifier is corresponding to the second relationship, and the other identifier is corresponding to the first relationship; and
the sender is specifically configured to:
   if the base station allows the third behavior mode to be configured, send information about the third behavior mode to the first terminal, so that the first terminal configures the third behavior mode.

In an eleventh possible implementation manner of the sixth aspect, with reference to the tenth possible implementation manner of the sixth aspect, the sender is further specifically configured to:
if the base station does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter;
or the sender is further specifically configured to:
   if the base station does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
      or
   send information about the second behavior mode and the first parameter to the first terminal, so that the first terminal performs a configuration according to the information about the second behavior mode and the first parameter.

In a twelfth possible implementation manner of the sixth aspect, with reference to the second possible implementation manner of the sixth aspect to the eleventh possible implementation manner of the sixth aspect, the processor is further configured to:
before determining the preferred behavior mode corresponding to the first terminal according to the at least one type of identifier, obtain a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires; and
the first parameter specifically includes:
   a parameter determined according to the first time length or the second time length.

In a thirteenth possible implementation manner of the sixth aspect, with reference to the sixth aspect to the twelfth possible implementation manner of the sixth aspect, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

Embodiments of the present invention provide a terminal information reporting method and a related device, where the method includes: after obtaining first information, sending, by a first terminal, the first information to a base station, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer; and obtaining, by the base station, the first information, and determining, according to the first information, whether a current configuration of the base station can satisfy predetermined quality of service, where if the current configuration of the base station cannot satisfy the predetermined quality of service, a current configuration parameter and a current configuration policy can be adjusted to improve the quality of service.

### BRIEF DESCRIPTION OF DRAWINGS

FIG. 1 shows a terminal information reporting method according to an embodiment of the present invention;
FIG. 2 is a schematic diagram representing a first timing relationship between a moment at which a terminal triggers or sends a measurement report and a first timer according to an embodiment of the present invention;
FIG. 3 is a schematic diagram representing a second timing relationship between a moment at which a terminal triggers or sends a measurement report and a first timer according to an embodiment of the present invention;
FIG. 4 is a schematic diagram representing a third timing relationship between a moment at which a terminal triggers or sends a measurement report and a first timer according to an embodiment of the present invention;
FIG. 5 shows another terminal information reporting method according to an embodiment of the present invention;
FIG. 6 shows still another terminal information reporting method according to an embodiment of the present invention;
FIG. 7 shows a behavior of a first terminal when a first relationship occurs according to an embodiment of the present invention;
FIG. 8 shows a behavior of a first terminal when a second relationship or a third relationship occurs in a first behavior mode according to an embodiment of the present invention;
FIG. 9 shows a behavior of a first terminal when a second relationship occurs according to an embodiment of the present invention;
FIG. 10 shows a behavior of a first terminal when a first relationship or a third relationship occurs in a second behavior mode according to an embodiment of the present invention;
FIG. 11 shows a behavior of a first terminal when a third relationship occurs in a third behavior mode according to an embodiment of the present invention;
FIG. 12 shows a behavior of a first terminal in a fourth behavior mode according to an embodiment of the present invention;
FIG. 13 shows still another terminal information reporting method according to an embodiment of the present invention;
FIG. 14 shows still another terminal information reporting method according to an embodiment of the present invention;
FIG. 15 is a schematic structural diagram of a first terminal according to an embodiment of the present invention;
FIG. 16 is a schematic structural diagram of another first terminal according to an embodiment of the present invention;
FIG. 17 is a schematic structural diagram of a base station according to an embodiment of the present invention;
FIG. 18 is a schematic structural diagram of another base station according to an embodiment of the present invention;
FIG. 19 is a schematic structural diagram of a first terminal according to an embodiment of the present invention;
FIG. 20 is a schematic structural diagram of a base station according to an embodiment of the present invention; and
FIG. 21 is a schematic structural diagram of another base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

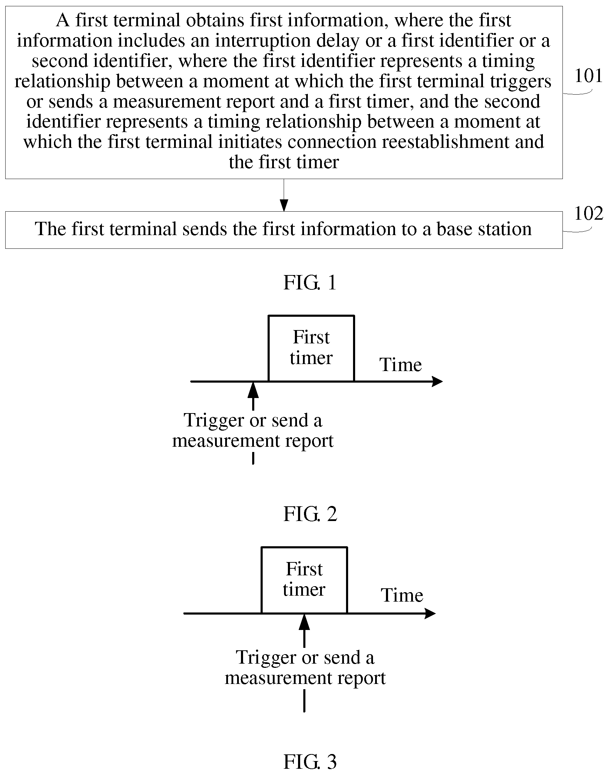

An embodiment of the present invention provides a terminal information reporting method, and specifically as shown in FIG. 1, the method includes:
101: A first terminal obtains first information, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

Specifically, in a terminal communication process, when a terminal determines, by means of measurement, that a channel condition of a serving cell deteriorates to an extent, the terminal starts a T310, where the T310 is a timer maintained by the terminal, and is also the first timer provided in this embodiment of the present invention. After the terminal starts the T310, communication between the terminal and the serving cell basically cannot be normally performed, and approximates to an interrupted state, that is, an interruption delay is generated. The interruption delay is directly related to quality of service. If the base station cannot learn a length of the interruption delay, the base station loses control over the quality of service, cannot know whether a current configuration parameter or a current configuration policy can satisfy predetermined quality of service, and further cannot adjust the current configuration parameter or configuration policy to improve the quality of service.

Specifically, the first terminal may directly obtain the interruption delay, and send the interruption delay to the base station; the first terminal may also first obtain the first identifier, where the first identifier represents the timing relationship between the moment at which the first terminal triggers or sends the measurement report and the first timer, and then the base station obtains an interruption delay corresponding to the first identifier according to a pre-stored correspondence between the first identifier and the interruption delay; the first terminal may further first obtain the second identifier, where the second identifier represents the timing relationship between the moment at which the first terminal initiates connection reestablishment and the first timer, and then the base station obtains an interruption delay corresponding to the second identifier according to a pre-stored correspondence between the second identifier and the interruption delay. This embodiment of the present invention is not specifically limited thereto.

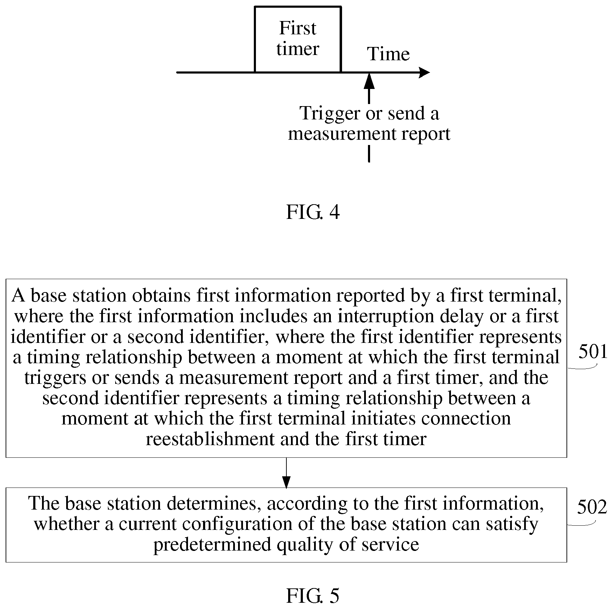

Specifically, the timing relationship between the moment at which the first terminal triggers or sends the measurement report and the first timer may specifically include:
a first relationship shown in FIG. 2, where the first relationship is that the first terminal triggers or sends the measurement report before the first timer is started;
   or
a second relationship shown in FIG. 3, where the second relationship is that the first terminal triggers or sends the measurement report during running of the first timer;
   or
a third relationship shown in FIG. 4, where the third relationship is that the first terminal still does not trigger or send the measurement report when the first timer expires.

The timing relationship between the moment at which the first terminal initiates connection reestablishment and the first timer may specifically include:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

It should be noted that, the T310 is only a specific first timer provided in this embodiment of the present invention, and certainly, the first timer may further be another type of timer, which is not specifically limited in this embodiment of the present invention.
102: The first terminal sends the first information to a base station.

Specifically, after obtaining the first information, the first terminal sends the first information to the base station; the base station determines, according to the interruption delay or according to an interruption delay determined by the first identifier or according to an interruption delay determined by the second identifier, whether a current configuration of the base station satisfies predetermined quality of service; if the current configuration of the base station cannot satisfy the predetermined quality of service, the current configuration parameter or configuration policy of the base station may be adjusted to improve the current quality of service.

Certainly, the sending the first information to the base station may also solve another technical problem, which is not specifically limited in this embodiment of the present invention.

An embodiment of the present invention further provides a terminal information reporting method, and specifically as shown in FIG. 5, the method includes:
501: A base station obtains first information reported by a first terminal, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.
   Specifically, the base station may obtain the first information reported by the first terminal, where the first information may include the interruption delay; the first information may also include the first identifier, where the first identifier represents the timing relationship between the moment at which the first terminal triggers or sends the measurement report and a first timer; the first information may further include the second identifier, where the second identifier represents a timing relationship between the moment at which the first terminal initiates connection reestablishment and the first timer, which is not specifically limited in this embodiment of the present invention.
   Specifically, the timing relationship between the moment at which the first terminal triggers or sends the measurement report and the first timer may specifically include:
   a first relationship shown in FIG. 2, where the first relationship is that the first terminal triggers or sends the measurement report before the first timer is started;
      or
   a second relationship shown in FIG. 3, where the second relationship is that the first terminal triggers or sends the measurement report during running of the first timer;
      or
   a third relationship shown in FIG. 4, where the third relationship is that the first terminal still does not trigger or send the measurement report when the first timer expires.

   The timing relationship between the moment at which the first terminal initiates connection reestablishment and the first timer may specifically include:
   a fourth relationship, where the fourth relationship is that the first terminal initiates connection reestablishment when the first timer expires, and a timer length currently configured for the first timer is the first timer length;
      or
   a fifth relationship, where the fifth relationship is that the first terminal initiates connection reestablishment when the first timer expires, and a timer length currently configured for the first timer is the second timer length, where the first timer length and the second timer length are different;
      or
   a sixth relationship, where the sixth relationship is that the first terminal initiates connection reestablishment during running of the first timer, and a timer length currently configured for the first timer is the second timer length.
502: The base station determines, according to the first information, whether a current configuration of the base station can satisfy predetermined quality of service.

Specifically, after obtaining the first information, the base station may determine, according to the first information, whether the current configuration of the base station can satisfy the predetermined quality of service, which may specifically be as follows:
if the first information is the interruption delay, determining, according to the interruption delay, whether the current configuration of the base station can satisfy the predetermined quality of service; or
if the first information is the first identifier, obtaining an interruption delay corresponding to the first identifier according to a pre-stored correspondence between the first identifier and the interruption delay; and
determining, according to the interruption delay corresponding to the first identifier, whether the current configuration of the base station can satisfy the predetermined quality of service; or
if the first information is the second identifier, obtaining an interruption delay corresponding to the second identifier according to a pre-stored correspondence between the second identifier and the interruption delay; and
determining, according to the interruption delay corresponding to the second identifier, whether the current configuration of the base station can satisfy the predetermined quality of service.

This embodiment of the present invention only exemplarily provides a method for determining, according to first information, whether a current configuration of a base station can satisfy predetermined quality of service, and certainly, another method for determining, according to first information, whether a current configuration of a base station can satisfy predetermined quality of service may also exist, which is not specifically limited in this embodiment of the present invention.

It is easy for a person skilled in the art to conceive that, if the current configuration of the base station cannot satisfy the predetermined quality of service, the current configuration parameter or configuration policy of the base station may be adjusted to improve the current quality of service, which is not specifically limited in this embodiment of the present invention.

Based on description of the foregoing embodiment, in this embodiment of the present invention, the method in which a first terminal obtains first information, and sends the first information to a base station enables the base station to obtain the first information, and determine, according to the first information, whether a current configuration of the base station can satisfy predetermined quality of service; further, if the current configuration of the base station cannot satisfy the predetermined quality of service, a current configuration parameter and a current configuration policy can be adjusted to improve the quality of service, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

### Embodiment 2

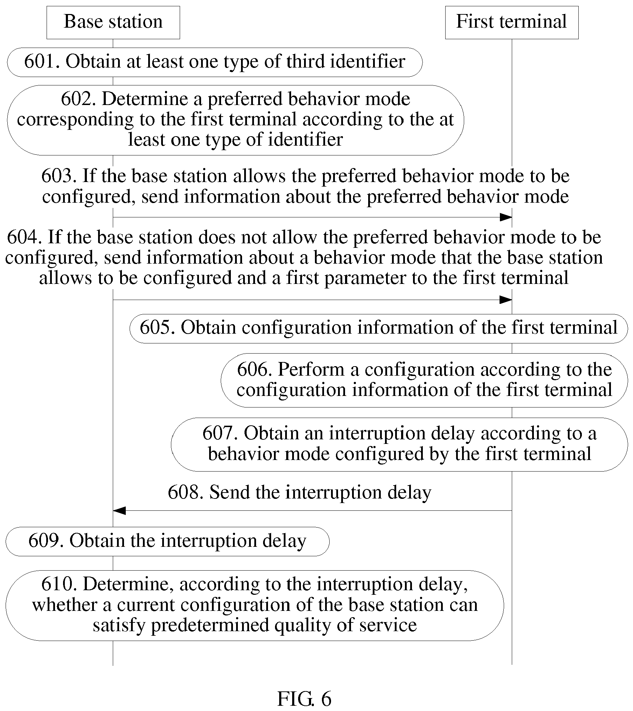

An embodiment of the present invention provides a terminal information reporting method, and specifically as shown in FIG. 6, the method includes:
601: A base station obtains at least one type of third identifier, where the third identifier represents a timing relationship between a moment at which a second terminal triggers or sends a measurement report and a first timer.
   Specifically, before determining a behavior mode to be configured for a first terminal, the base station obtains third identifiers of multiple terminals, then determines, according to a statistical result of the obtained third identifiers, the behavior mode to be configured, and then configures the behavior mode for the first terminal, where the second terminal may include the first terminal, or may not include the first terminal, which is not specifically limited in this embodiment of the present invention.
   Specifically, the timing relationship between the moment at which the second terminal triggers or sends the measurement report and the first timer may specifically include:
   a first relationship shown in FIG. 2, where the first relationship is that the second terminal triggers or sends the measurement report before the first timer is started;
      or
   a second relationship shown in FIG. 3, where the second relationship is that the second terminal triggers or sends the measurement report during running of the first timer;
      or
   a third relationship shown in FIG. 4, where the third relationship is that the second terminal still does not trigger or send the measurement report when the first timer expires.
602: The base station determines a preferred behavior mode corresponding to a first terminal according to the at least one type of third identifier.

Specifically, the determining a preferred behavior mode corresponding to a first terminal according to the at least one type of third identifier specifically includes:
counting a quantity of third identifiers of each type of the at least one type of third identifier;
determining a fourth identifier according to the quantity of third identifiers of each type of the at least one type of identifier, where the fourth identifier is a type of identifier with a largest quantity of identifiers among the at least one type of third identifier; and
determining a preferred behavior mode corresponding to the fourth identifier according to the fourth identifier, and determining that the preferred behavior mode is the preferred behavior mode corresponding to the first terminal.

Specifically, the fourth identifier may specifically represent the first relationship, may also represent the second relationship, and may further represent the third relationship, which is not specifically limited in this embodiment of the present invention. It is only described that the fourth identifier is a type of identifier with a largest quantity of identifiers among the at least one type of third identifier.

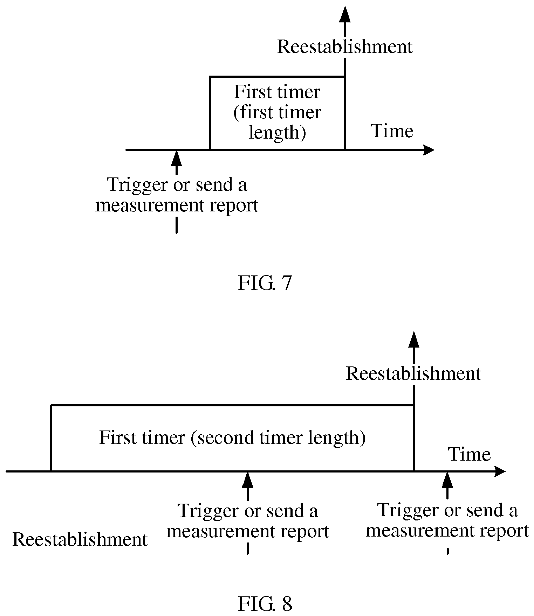

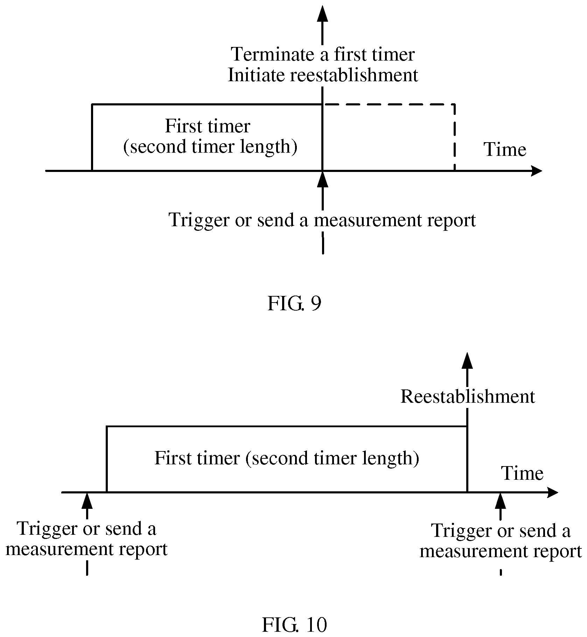

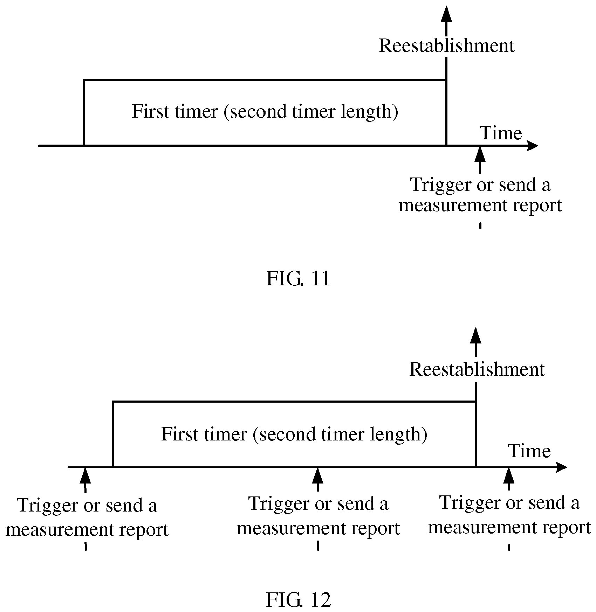

Specifically, the preferred behavior mode may specifically include:
a first behavior mode, including:
   as shown in FIG. 7, when the first relationship occurs, a timer length configured by the first terminal for the first timer is a first timer length, and when the first timer expires, the first terminal initiates connection reestablishment; and
   as shown in FIG. 8, when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   as shown in FIG. 9, when the second relationship occurs and when the first terminal triggers or sends the measurement report, the first terminal terminates the running first timer and initiates connection reestablishment; and
   as shown in FIG. 10, when the first relationship or the third relationship occurs and when the first timer expires, the first terminal initiates connection reestablishment;
   or
a third behavior mode, including:
   as shown in FIG. 7, when the first relationship occurs, a timer length configured by the first terminal for the first timer is a first timer length, and when the first timer expires, the first terminal initiates connection reestablishment;
   as shown in FIG. 9, when the second relationship occurs, a timer length configured by the first terminal for the first timer is a second timer length, and when the first terminal triggers or sends the measurement report, the first terminal terminates the running first timer and initiates connection reestablishment; and
   as shown in FIG. 11, when the third relationship occurs, a timer length configured by the first terminal for the first timer is the second timer length, and when the first timer expires, the first terminal initiates connection reestablishment; or
a fourth behavior mode, including:
   a timer length configured by the first terminal for the first timer is a second timer length; and
   as shown in FIG. 12, when the first timer expires, the first terminal initiates connection reestablishment.

Specifically, from the perspective of reducing an average interruption delay, if the fourth identifier represents the first relationship, the preferred behavior mode corresponding to the fourth identifier may be the first behavior mode or the third behavior mode;
if the fourth identifier represents the second relationship, the preferred behavior mode corresponding to the fourth identifier may be the second behavior mode or the third behavior mode;
if the fourth identifier represents the third relationship, and a quantity of fourth identifiers is not greater than a sum of a quantity of fifth identifiers and a quantity of sixth identifiers, the preferred behavior mode corresponding to the fourth identifier is the third behavior mode, where one identifier of the fifth identifier and the sixth identifier is corresponding to the second relationship, and the other identifier is corresponding to the first relationship.

It should be noted that, if the fourth identifier represents the third relationship, and the quantity of fourth identifiers is greater than the sum of the quantity of fifth identifiers and the quantity of sixth identifiers, it indicates that in most cases, the second terminal still does not trigger or send a measurement report when the first timer expires, which is an unexpected case. The preferred behavior mode corresponding to this case is not discussed in this embodiment of the present invention.

It should be noted that, the timer length of the first timer is not necessarily constant, and may be set according to an actual requirement. The first timer length and the second timer length in this embodiment of the present invention may be the same, or may be different, which is not specifically limited herein. However, in a general case, in order to reduce the average interruption delay, different timer lengths are generally set for the first timer, and the first timer length is generally less than the second timer length.
603: If the base station allows the preferred behavior mode to be configured, the base station sends information about the preferred behavior mode to the first terminal, so that the first terminal configures the preferred behavior mode.

Specifically, when the fourth identifier represents the first relationship, with reference to description of step 603, if the base station allows the first behavior mode to be configured, information about the first behavior mode is sent to the first terminal, so that the first terminal configures the first behavior mode; if the base station allows the third behavior mode to be configured, information about the third behavior mode is sent to the first terminal, so that the first terminal configures the third behavior mode;
when the fourth identifier represents the second relationship, with reference to description of step 603, if the base station allows the second behavior mode to be configured, information about the second behavior mode is sent to the first terminal, so that the first terminal configures the second behavior mode; if the base station allows the third behavior mode to be configured, information about the third behavior mode is sent to the first terminal, so that the first terminal configures the third behavior mode; or
when the fourth identifier represents the third relationship, if the quantity of fourth identifiers is not greater than the sum of the quantity of fifth identifiers and the quantity of sixth identifiers, with reference to description of step 603, if the base station allows the third behavior mode to be configured, information about the third behavior mode is sent to the first terminal, so that the first terminal configures the third behavior mode.

It should be noted that, the behavior mode that the base station allows to be configured includes the following several cases: the first behavior mode + the second behavior mode + the fourth behavior mode, or the fourth behavior mode + the first behavior mode, or the fourth behavior mode + the second behavior mode, or the fourth behavior mode + the third behavior mode; therefore, a case in which the first behavior mode and the third behavior mode coexist does not exist, and a case in which the second behavior mode and the third behavior mode coexist does not exist either. The third behavior mode is substantially a case in which the first behavior mode and the second behavior mode are combined in order to further reduce the average interruption delay.
604: If the base station does not allow the preferred behavior mode to be configured, send information about a behavior mode that the base station allows to be configured and a first parameter to the first terminal, so that the first terminal performs a configuration according to the information about the behavior mode that the base station allows to be configured and the first parameter, where the first parameter is a parameter enabling the behavior mode that the base station allows to be configured to be the preferred behavior mode of the first terminal.

Specifically, when the fourth identifier represents the first relationship, with reference to description of step 603, if the base station does not allow the first behavior mode to be configured and does not allow the third behavior mode to be configured, but allows the fourth behavior mode and the second behavior mode to be configured, information about the fourth behavior mode and the first parameter are sent to the first terminal, so that the first terminal performs a configuration according to the information about the fourth behavior mode and the first parameter, or the information about the second behavior mode and the first parameter are sent to the first terminal, so that the first terminal performs a configuration according to the information about the second behavior mode and the first parameter;
when the fourth identifier represents the second relationship, with reference to description of step 603, if the base station does not allow the second behavior mode to be configured and does not allow the third behavior mode to be configured, but allows the fourth behavior mode and the first behavior mode to be configured, information about the fourth behavior mode and the first parameter are sent to the first terminal, so that the first terminal performs a configuration according to the information about the fourth behavior mode and the first parameter, or the information about the first behavior mode and the first parameter are sent to the first terminal, so that the first terminal performs a configuration according to the information about the second behavior mode and the first parameter; or
when the fourth identifier represents the third relationship, if the quantity of fourth identifiers is not greater than the sum of the quantity of fifth identifiers and the quantity of sixth identifiers, with reference to description of step 603:
if the base station does not allow the third behavior mode to be configured, but allows the fourth behavior mode and the first behavior mode to be configured, information about the fourth behavior mode and the first parameter are sent to the first terminal, so that the first terminal performs a configuration according to the information about the fourth behavior mode and the first parameter, or the information about the first behavior mode and the first parameter are sent to the first terminal, so that the first terminal performs a configuration according to the information about the first behavior mode and the first parameter; or
if the base station does not allow the third behavior mode to be configured, but allows the fourth behavior mode and the second behavior mode to be configured, information about the fourth behavior mode and the first parameter are sent to the first terminal, so that the first terminal performs a configuration according to the information about the fourth behavior mode and the first parameter, or the information about the second behavior mode and the first parameter are sent to the first terminal, so that the first terminal performs a configuration according to the information about the second behavior mode and the first parameter.

It should be noted that, if the base station does not allow the preferred behavior mode to be configured, in order that the average interruption delay may still be reduced, the base station may send the information about the behavior mode allowed to be configured and the first parameter to the first terminal, and the first terminal changes a timing relationship between a moment at which the first terminal triggers or sends a measurement report and a first timer according to the first parameter, so that when the relationship occurs, the behavior mode that the base station allows to be configured may make the interruption delay shorter.

Specifically, the first parameter may be a parameter determined according to a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

Exemplarily, when the fourth identifier represents the first relationship shown in FIG. 2, if the base station does not allow the first behavior mode to be configured and does not allow the third behavior mode to be configured, but allows the fourth behavior mode and the second behavior mode to be configured, the information about the second behavior mode and the first parameter may be sent to the first terminal, where the first parameter is new TTT determined with reference to current time to trigger (Time to Trigger, TTT) and according to the first time length, and the first terminal configures the second behavior mode, and adjusts, according to the first parameter, the moment at which the measurement report is triggered or sent, so that the timing relationship between the moment at which the first terminal triggers or sends the measurement report and the first timer is the second relationship shown in FIG. 3. In addition, because the first terminal has configured the second behavior mode, the first terminal may initiate connection reestablishment during running of the first timer, so that the interruption delay is a time length between the moment at which the first timer is started and the moment at which the measurement report is triggered or sent, thereby reducing the interruption delay. Certainly, the base station may also send another parameter (such as a measurement threshold) to the first terminal to achieve an effect the same as the foregoing effect, which is not described herein again in this embodiment of the present invention.

Certainly, the base station may also send the fourth behavior mode and the first parameter to the first terminal, so that the first terminal performs a configuration. Exemplarily, the first parameter is new TTT determined with reference to current TTT and according to the first time length. The first terminal configures the fourth behavior mode, and adjusts, according to the first parameter, the moment at which the measurement report is triggered or sent, so that the timing relationship between the moment at which the first terminal triggers or sends the measurement report and the first timer is the second relationship shown in FIG. 3. Then in a subsequent process, when the base station determines, according to a statistical result, a preferred behavior mode to be configured for the first terminal, the base station determines that the preferred behavior mode is the second behavior mode or the third behavior mode because the first identifier reported by the first terminal represents the second relationship. Afterwards, the base station may configure, for the first terminal, the second behavior mode that the base station allows to be configured, and then the first terminal may initiate connection reestablishment during running of the first timer, so that the interruption delay is a time length between the moment at which the first timer is started and the moment at which the measurement report is triggered or sent, thereby reducing the interruption delay.
605: The first terminal obtains configuration information of the first terminal, where the configuration information includes at least information about a behavior mode to be configured for the first terminal.

Specifically, the configuration information of the first terminal obtained by the first terminal may be information about a preferred behavior mode, where the preferred behavior mode is the behavior mode to be configured for the first terminal, or may be information about a behavior mode that the base station allows to be configured and the first parameter, where the behavior mode that the base station allows to be configured is the behavior mode to be configured for the first terminal. The configuration information of the first terminal is not specifically limited in this embodiment of the present invention.
606: The first terminal performs a configuration according to the configuration information of the first terminal.

Specifically, after the first terminal obtains the configuration information of the first terminal, the first terminal may perform a configuration according to the configuration information of the first terminal.

Specifically, with reference to description of step 605, if the configuration information of the first terminal is the information about the preferred behavior mode, the first terminal configures the preferred behavior mode for the first terminal according to the information about the preferred behavior mode; if the configuration information of the first terminal is the information about the behavior mode that the base station allows to be configured and the first parameter, the first terminal configures, for the first terminal according to the information about the behavior mode that the base station allows to be configured, the behavior mode that the base station allows to be configured, and adjusts the configuration information of the first terminal according to the first parameter, so that in a subsequent process, the moment at which the first terminal triggers or sends the measurement report may make an interruption delay of the first terminal in the behavior mode that the base station allows to be configured shorter.

With reference to description of step 601 to step 606, it is easy for a person skilled in the art to obtain that, the average interruption delay experienced by the first terminal may be reduced by implementing a configuration for the first terminal using the present invention.
607: The first terminal obtains an interruption delay according to the behavior mode configured for the first terminal.

Specifically, different behavior modes configured by the first terminal are corresponding to different interruption delays:

If the behavior mode configured for the first terminal is the first behavior mode, the obtaining an interruption delay according to the behavior mode configured for the first terminal specifically includes:
when the first relationship occurs, obtaining that the first timer length of the first timer is the interruption delay; and
when the second relationship or the third relationship occurs, obtaining that the second timer length of the first timer is the interruption delay.

If the behavior mode to be configured for the first terminal is the second behavior mode, the obtaining an interruption delay according to the behavior mode configured for the first terminal specifically includes:
when the second relationship occurs, obtaining that a running time length value of the first timer is the interruption delay, where the running time length value of the first timer is a time length between the moment at which the first timer is started and the moment at which the first terminal triggers or sends the measurement report; and
when the first relationship or the third relationship occurs, obtaining that the second timer length of the first timer is the interruption delay.

If the behavior mode to be configured for the first terminal is the third behavior mode, the obtaining an interruption delay according to the behavior mode configured for the first terminal specifically includes:
when the first relationship occurs, obtaining that the first timer length of the first timer is the interruption delay;
when the second relationship occurs, obtaining that a running time length value of the first timer is the interruption delay, where the running time length value of the first timer is a time length between the moment at which the first timer is started and the moment at which the first terminal triggers or sends the measurement report; and
when the third relationship occurs, obtaining that the second timer length of the first timer is the interruption delay.

If the behavior mode to be configured for the first terminal is the fourth behavior mode, the obtaining an interruption delay according to the behavior mode configured for the first terminal specifically includes: obtaining that the second timer length of the first timer is the interruption delay.
608: The first terminal sends the interruption delay to the base station.
609: The base station obtains the interruption delay.
610: The base station determines, according to the interruption delay, whether a current configuration of the base station can satisfy predetermined quality of service.

It is easy for a person skilled in the art to conceive that, if the current configuration of the base station cannot satisfy the predetermined quality of service, a current configuration parameter or a current configuration policy of the base station may be adjusted to improve current quality of service, which is not specifically limited in this embodiment of the present invention.

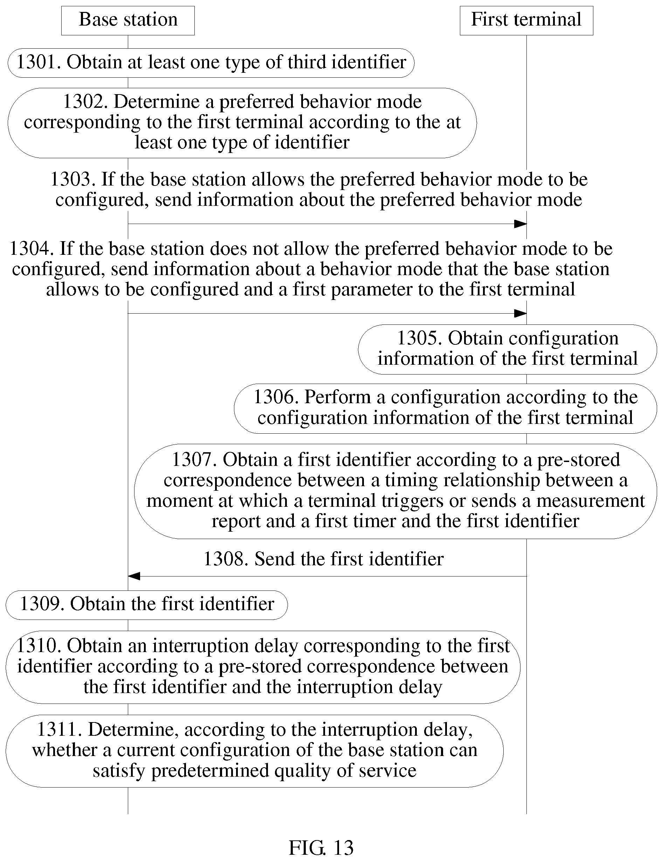

Optionally, an embodiment of the present invention further provides a terminal information reporting method, and specifically as shown in FIG. 13, the method includes:
1301: A base station obtains at least one type of third identifier, where the third identifier represents a relationship between a moment at which a second terminal triggers or sends a measurement report and a first timer.
1302: The base station determines a preferred behavior mode corresponding to a first terminal according to the at least one type of third identifier.
1303: The base station sends, if the base station allows the preferred behavior mode to be configured, information about the preferred behavior mode to the first terminal, so that the first terminal configures the preferred behavior mode.
1304: The base station sends, if the base station does not allow the preferred behavior mode to be configured, information about a behavior mode that the base station allows to be configured and a first parameter to the first terminal, so that the first terminal performs a configuration according to the information about the behavior mode that the base station allows to be configured and the first parameter, where the first parameter is a parameter enabling the behavior mode that the base station allows to be configured to be the preferred behavior mode of the first terminal.
1305: The first terminal obtains configuration information of the first terminal, where the configuration information includes at least information about a behavior mode to be configured for the first terminal.
1306: The first terminal performs a configuration according to the configuration information of the first terminal.
1307: The first terminal obtains the first identifier according to a pre-stored correspondence between a timing relationship between a moment at which a terminal triggers or sends a measurement report and the first timer and the first identifier.

Specifically, the first terminal may pre-store a correspondence between a timing relationship between a moment at which a terminal triggers or sends a measurement report and the first timer and the first identifier, which may be specifically shown in Table 1:

**Table 1**

| Relationship | First identifier |
|---|---|
| First relationship | A1 |
| Second relationship | A2 |
| Third relationship | A3 |

The first relationship, the second relationship, and the third relationship are shown in FIG. 2, FIG. 3, and FIG. 4 respectively, and are not described herein again. A first identifier corresponding to the first relationship is A1, a first identifier corresponding to the second relationship is A2, and a first identifier corresponding to the third relationship is A3. Exemplarily, when the first terminal triggers or sends the measurement report before the first timer is started, that is, when the first relationship occurs, the first identifier A1 is obtained according to a correspondence shown in Table 1.

It should be noted that, Table 1 only exemplarily provides a correspondence between a timing relationship between a moment at which a terminal triggers or sends a measurement report and the first timer and the first identifier, and certainly, the first identifier may further be of another type, which is not specifically limited in this embodiment of the present invention.
1308: The first terminal sends the first identifier to the base station.
1309: The base station obtains the first identifier.
1310: The base station obtains an interruption delay corresponding to the first identifier according to a pre-stored correspondence between the first identifier and the interruption delay.

Specifically, after the base station configures a behavior mode for the first terminal, the base station may pre-store a correspondence between a first identifier and an interruption delay in the behavior mode, which may be specifically shown in Table 2:

**Table 2**

| First identifier | Interruption delay |
|---|---|
| A1 | T1 |
| A2 | T2 |
| A3 | T3 |

An interruption delay corresponding to the first identifier A1 is T1, an interruption delay corresponding to the first identifier A2 is T2, and an interruption delay corresponding to the first identifier A3 is T3. Exemplarily, when the first identifier obtained by the base station is A1, the interruption delay T1 is obtained according to a correspondence shown in Table 2.

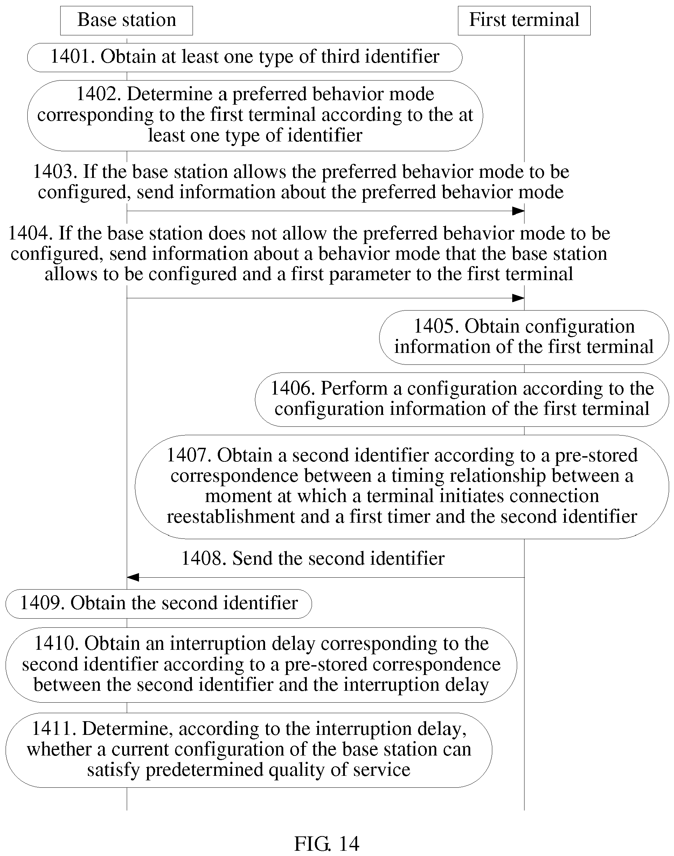

It should be noted that Table 2 only exemplarily provides a correspondence between a first identifier and an interruption delay, and certainly, as shown in step 1307, the first identifier may further be of another type, which is not specifically limited in this embodiment of the present invention.
1311: The base station determines, according to the interruption delay, whether a current configuration of the base station can satisfy predetermined quality of service.
   Specifically, for description of steps in this embodiment of the present invention that are the same as those in the embodiment shown in FIG. 6, reference may be made to description of the embodiment shown in FIG. 6, which is not described herein again in this embodiment of the present invention.
   Optionally, an embodiment of the present invention further provides a terminal information reporting method, and specifically as shown in FIG. 14, the method includes:
1401: A base station obtains at least one type of third identifier, where the third identifier represents a timing relationship between a moment at which a second terminal triggers or sends a measurement report and a first timer.
1402: The base station determines a preferred behavior mode corresponding to a first terminal according to the at least one type of third identifier.
1403: The base station sends, if the base station allows the preferred behavior mode to be configured, information about the preferred behavior mode to the first terminal, so that the first terminal configures the preferred behavior mode.
1404: The base station sends, if the base station does not allow the preferred behavior mode to be configured, information about a behavior mode that the base station allows to be configured and a first parameter to the first terminal, so that the first terminal performs a configuration according to the information about the behavior mode that the base station allows to be configured and the first parameter, where the first parameter is a parameter enabling the behavior mode that the base station allows to be configured to be the preferred behavior mode of the first terminal.
1405: The first terminal obtains configuration information of the first terminal, where the configuration information includes at least information about a behavior mode to be configured for the first terminal.
1406: The first terminal performs a configuration according to the configuration information of the first terminal.
1407: The first terminal obtains a second identifier according to a pre-stored correspondence between a timing relationship between a moment at which a terminal initiates connection reestablishment and the first timer and the second identifier.

Specifically, a timing relationship between a moment at which the first terminal initiates connection reestablishment and the first timer may specifically include:
a fourth relationship, where the fourth relationship is that the first terminal initiates connection reestablishment when the first timer expires, and a timer length currently configured for the first timer is a first timer length;
or a fifth relationship, where the fifth relationship is that the first terminal initiates connection reestablishment when the first timer expires, and a timer length currently configured for the first timer is a second timer length, where a first timer length and the second timer length are different;
or a sixth relationship, where the sixth relationship is that the first terminal initiates connection reestablishment during running of the first timer, and a timer length currently configured for the first timer is a second timer length.

Specifically, the first terminal may pre-store a correspondence between a timing relationship between a moment at which a terminal initiates connection reestablishment and a the first timer and the second identifier, which may be specifically shown in Table 3:

**Table 3**

| Relationship | Second identifier |
|---|---|
| Fourth relationship | B1 |
| Fifth relationship | B2 |
| Sixth relationship | B3 |

A second identifier corresponding to the fourth relationship is B1, a second identifier corresponding to the fifth relationship is B2, and a second identifier corresponding to the sixth relationship is B3. Exemplarily, when the first terminal initiates connection reestablishment when the first timer expires and the timer length configured for the first timer is the first timer length, that is, when the fourth relationship occurs, the second identifier B1 is obtained according to a correspondence shown in Table 3.

It should be noted that Table 3 only exemplarily provides a correspondence between a timing relationship between a moment at which a terminal initiates connection reestablishment and the first timer and the second identifier, and certainly, the second identifier may further be of another type, which is not specifically limited in this embodiment of the present invention.
1408: The first terminal sends the second identifier to the base station.
1409: The base station obtains the second identifier.
1410: The base station obtains an interruption delay corresponding to the second identifier according to a pre-stored correspondence between the second identifier and the interruption delay.

Specifically, the base station may pre-store a correspondence between a second identifier and an interruption delay, which may be specifically shown in Table 4:

**Table 4**

| Second identifier | Interruption delay |
|---|---|
| B1 | T4 |
| B2 | T5 |
| B3 | T6 |

An interruption delay corresponding to the second identifier B1 is T4, an interruption delay corresponding to the second identifier B2 is T5, and an interruption delay corresponding to the second identifier B3 is T6. Exemplarily, when the second identifier obtained by the base station is B 1, the interruption delay T4 is obtained according to a correspondence shown in Table 4.

It should be noted that Table 4 only exemplarily provides a correspondence between a second identifier and an interruption delay, and certainly, as shown in step 1407, the second identifier may further be of another type, which is not specifically limited in this embodiment of the present invention.
1411: The base station determines, according to the interruption delay, whether a current configuration of the base station can satisfy predetermined quality of service.

Specifically, for description of steps in this embodiment of the present invention that are the same as those in the embodiment shown in FIG. 6, reference may be made to description of the embodiment shown in FIG. 6, which is not described herein again in this embodiment of the present invention.

Based on description of the foregoing embodiment, in this embodiment of the present invention, the method in which a first terminal obtains first information, and sends the first information to a base station enables the base station to obtain the first information, and determine, according to the first information, whether a current configuration of the base station can satisfy predetermined quality of service; further, if the current configuration of the base station cannot satisfy the predetermined quality of service, a current configuration parameter and a current configuration policy can be adjusted to improve the quality of service, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

### Embodiment 3

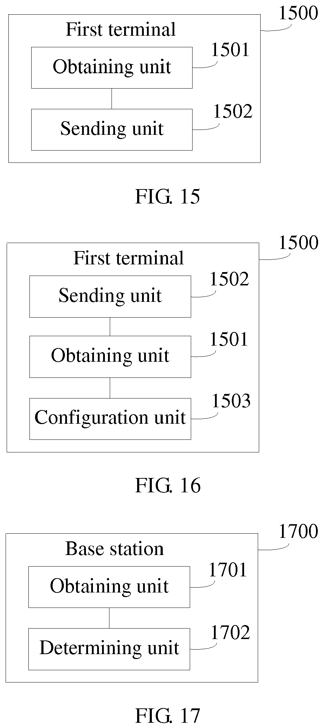

This embodiment of the present invention provides a first terminal 1500, and specifically as shown in FIG. 15, the first terminal 1500 includes an obtaining unit 1501 and a sending unit 1502.

The obtaining unit 1501 is configured to obtain first information, where the first information includes an interruption delay or a first identifier or a second identifier, where the first identifier represents a timing relationship between a moment at which the first terminal 1500 triggers or sends a measurement report and a first timer, and the second identifier represents a timing relationship between a moment at which the first terminal 1500 initiates connection reestablishment and the first timer.

The sending unit 1502 is configured to send the first information obtained by the obtaining unit 1501 to a base station.

Further, the sending unit 1502 is specifically configured to:
send the first information to the base station, where the base station determines, according to the interruption delay or according to an interruption delay determined by the first identifier or according to an interruption delay determined by the second identifier, whether a current configuration of the base station can satisfy predetermined quality of service.

Further, as shown in FIG. 16, the first terminal 1500 further includes a configuration unit 1503.

The obtaining unit 1501 is further configured to:
obtain configuration information of the first terminal 1500 before obtaining the first information, where the configuration information of the first terminal 1500 is determined by the base station according to a third identifier reported by a second terminal, the third identifier represents a timing relationship between a moment at which the second terminal triggers or sends a measurement report and the first timer, and the configuration information of the first terminal 1500 includes at least information about a behavior mode to be configured for the first terminal 1500.

The configuration unit 1503 is configured to perform a configuration according to the configuration information of the first terminal 1500 obtained by the obtaining unit 1501.

The obtaining unit 1501 is specifically configured to:
if the first information is the interruption delay, obtain the interruption delay according to the behavior mode configured for the first terminal 1500.

The obtaining unit 1501 is further specifically configured to:
if the first information is the first identifier, obtain the first identifier according to a pre-stored correspondence between a timing relationship between a moment at which a terminal triggers or sends a measurement report and the first timer and the first identifier.

The obtaining unit 1501 is further specifically configured to:
if the first information is the second identifier, obtain the second identifier according to a pre-stored correspondence between a timing relationship between a moment at which a terminal initiates connection reestablishment and the first timer and the second identifier.

Further, the configuration information of the first terminal 1500 is further determined by the base station according to a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

Further, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

Further, the behavior mode to be configured for the first terminal 1500 specifically includes:
a first behavior mode, including:
   when the first relationship occurs, a timer length configured by the first terminal 1500 for the first timer is a first timer length, and when the first timer expires, the first terminal 1500 initiates connection reestablishment; and
   when the second relationship or the third relationship occurs, a timer length configured by the first terminal 1500 for the first timer is a second timer length, and when the first timer expires, the first terminal 1500 initiates connection reestablishment;
   or
a second behavior mode, including:
   a timer length configured by the first terminal 1500 for the first timer is a second timer length;
   when the second relationship occurs and when the first terminal 1500 triggers or sends the measurement report, the first terminal 1500 terminates the running first timer and initiates connection reestablishment; and
   when the first relationship or the third relationship occurs and when the first timer expires, the first terminal 1500 initiates connection reestablishment;
   or
a third behavior mode, including:
   when the first relationship occurs, a timer length configured by the first terminal 1500 for the first timer is a first timer length, and when the first timer expires, the first terminal 1500 initiates connection reestablishment;
   when the second relationship occurs, a timer length configured by the first terminal 1500 for the first timer is a second timer length, and when the first terminal 1500 triggers or sends the measurement report, the first terminal 1500 terminates the running first timer and initiates connection reestablishment; and
   when the third relationship occurs, a timer length configured by the first terminal 1500 for the first timer is the second timer length, and when the first timer expires, the first terminal 1500 initiates connection reestablishment;
   or
a fourth behavior mode, including:
   a timer length configured by the first terminal 1500 for the first timer is a second timer length; and
   when the first timer expires, the first terminal 1500 initiates connection reestablishment.

Further, if the behavior mode to be configured for the first terminal 1500 is the first behavior mode, the obtaining unit 1501 is further specifically configured to:
when the first relationship occurs, obtain that the first timer length of the first timer is the interruption delay; and
when the second relationship or the third relationship occurs, obtain that the second timer length of the first timer is the interruption delay.

Optionally, if the behavior mode to be configured for the first terminal 1500 is the second behavior mode, the obtaining unit 1501 is further specifically configured to:
when the second relationship occurs, obtain that a running time length value of the first timer is the interruption delay, where the running time length value of the first timer is a time length between the moment at which the first timer is started and the moment at which the first terminal 1500 triggers or sends the measurement report; and
when the first relationship or the third relationship occurs, obtain that the second timer length of the first timer is the interruption delay.

Optionally, if the behavior mode to be configured for the first terminal 1500 is the third behavior mode, the obtaining unit 1501 is further specifically configured to:
when the first relationship occurs, obtain that the first timer length of the first timer is the interruption delay;
when the second relationship occurs, obtain that a running time length value of the first timer is the interruption delay, where the running time length value of the first timer is a time length between the moment at which the first timer is started and the moment at which the first terminal 1500 triggers or sends the measurement report; and
when the third relationship occurs, obtain that the second timer length of the first timer is the interruption delay.

Optionally, if the behavior mode to be configured for the first terminal 1500 is the fourth behavior mode, the obtaining unit 1501 is further specifically configured to:
obtain that the second timer length of the first timer is the interruption delay.

Further, the timing relationship between the moment at which the first terminal 1500 initiates connection reestablishment and the first timer specifically includes:
a fourth relationship, where the fourth relationship is that the first terminal 1500 initiates connection reestablishment when the first timer expires, and a timer length currently configured for the first timer is the first timer length;
   or
a fifth relationship, where the fifth relationship is that the first terminal 1500 initiates connection reestablishment when the first timer expires, and a timer length currently configured for the first timer is the second timer length, where the first timer length and the second timer length are different;
   or
a sixth relationship, where the sixth relationship is that the first terminal 1500 initiates connection reestablishment during running of the first timer, and a timer length currently configured for the first timer is the second timer length.

Specifically, for the method for reporting terminal information by using the first terminal, reference may be made to description of Embodiment 1 and Embodiment 2, which is not described again in this embodiment of the present invention.

Based on the first terminal provided in this embodiment of the present invention, an obtaining unit of the first terminal obtains first information, and a sending unit sends the first information to a base station, so that the base station may obtain the first information, and determine, according to the first information, whether a current configuration of the base station can satisfy predetermined quality of service; further, if the current configuration of the base station cannot satisfy the predetermined quality of service, a current configuration parameter and a current configuration policy can be adjusted to improve the quality of service, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

### Embodiment 4

This embodiment of the present invention provides a base station 1700, and specifically as shown in FIG. 17, the base station 1700 includes an obtaining unit 1701 and a determining unit 1702.

The obtaining unit 1701 is configured to obtain first information reported by a first terminal, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

The determining unit 1702 is configured to determine, according to the first information obtained by the obtaining unit 1701, whether a current configuration of the base station 1700 can satisfy predetermined quality of service.

Further, the determining unit 1702 is specifically configured to:
if the first information is the interruption delay, determine, according to the interruption delay, whether the current configuration of the base station 1700 can satisfy the predetermined quality of service; or
if the first information is the first identifier, obtain an interruption delay corresponding to the first identifier according to a pre-stored correspondence between the first identifier and the interruption delay; and
determine, according to the interruption delay corresponding to the first identifier, whether the current configuration of the base station 1700 can satisfy the predetermined quality of service; or
if the first information is the second identifier, obtain an interruption delay corresponding to the second identifier according to a pre-stored correspondence between the second identifier and the interruption delay; and
determine, according to the interruption delay corresponding to the second identifier, whether the current configuration of the base station 1700 can satisfy the predetermined quality of service.

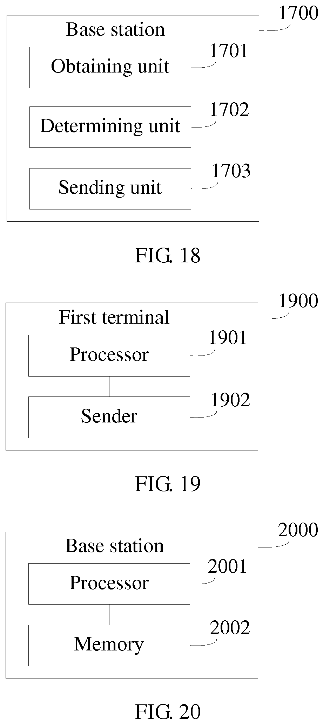

Further, as shown in FIG. 18, the base station 1700 further includes a sending unit 1703.

The obtaining unit 1701 is further configured to: before obtaining the first information reported by the first terminal, obtain at least one type of third identifier, where the third identifier represents a timing relationship between a moment at which a second terminal triggers or sends a measurement report and the first timer.

The determining unit 1702 is further configured to determine a preferred behavior mode corresponding to the first terminal according to the at least one type of third identifier obtained by the obtaining unit 1701.

The sending unit 1703 is configured to: if the base station 1700 allows the preferred behavior mode to be configured, send information about the preferred behavior mode determined by the determining unit 1702 to the first terminal, so that the first terminal configures the preferred behavior mode.

The sending unit 1703 is further configured to: if the base station 1700 does not allow the preferred behavior mode to be configured, send information about a behavior mode that the base station 1700 allows to be configured and a first parameter to the first terminal, so that the first terminal performs a configuration according to the information about the behavior mode that the base station 1700 allows to be configured and the first parameter, where the first parameter is a parameter enabling the behavior mode that the base station 1700 allows to be configured to be the preferred behavior mode of the first terminal.

Further, the determining unit 1702 is specifically configured to:
count a quantity of third identifiers of each type of the at least one type of third identifier;
determine a fourth identifier according to the quantity of third identifiers of each type of the at least one type of identifier, where the fourth identifier is a type of identifier with a largest quantity of identifiers among the at least one type of third identifier; and
determine a preferred behavior mode corresponding to the fourth identifier according to the fourth identifier, and determine that the preferred behavior mode is the preferred behavior mode corresponding to the first terminal.

Further, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

Further, the preferred behavior mode corresponding to the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment;
   or
a fourth behavior mode, including:
   a timer length configured by the first terminal for the first timer is a second timer length; and
   when the first timer expires, the first terminal initiates connection reestablishment.

Further, the fourth identifier specifically represents the first relationship.

The determining unit 1702 is specifically configured to:
determine, according to the fourth identifier, that the preferred behavior mode corresponding to the fourth identifier is the first behavior mode or the third behavior mode.

The sending unit 1703 is specifically configured to:
if the base station 1700 allows the first behavior mode to be configured, send information about the first behavior mode to the first terminal, so that the first terminal configures the first behavior mode; or
if the base station 1700 allows the third behavior mode to be configured, send information about the third behavior mode to the first terminal, so that the first terminal configures the third behavior mode.

Further, the sending unit 1703 is further specifically configured to:
if the base station 1700 does not allow the first behavior mode to be configured, and does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
   or
send information about the second behavior mode and the first parameter to the first terminal, so that the first terminal performs a configuration according to the information about the second behavior mode and the first parameter.

Optionally, the fourth identifier specifically represents the second relationship.

The determining unit 1702 is specifically configured to:
determine, according to the fourth identifier, that the preferred behavior mode corresponding to the fourth identifier is the second behavior mode or the third behavior mode.

The sending unit 1703 is specifically configured to:
if the base station 1700 allows the second behavior mode to be configured, send information about the second behavior mode to the first terminal, so that the first terminal configures the second behavior mode; or
if the base station 1700 allows the third behavior mode to be configured, send information about the third behavior mode to the first terminal, so that the first terminal configures the third behavior mode.

Further, the sending unit 1703 is further specifically configured to:
if the base station 1700 does not allow the second behavior mode to be configured, and does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter.

Optionally, the fourth identifier specifically represents the third relationship.

The determining unit 1702 is specifically configured to:
if a quantity of fourth identifiers is not greater than a sum of a quantity of fifth identifiers and a quantity of sixth identifiers, determine that the preferred behavior mode corresponding to the fourth identifier is the third behavior mode, where one identifier of the fifth identifier and the sixth identifier is corresponding to the second relationship, and the other identifier is corresponding to the first relationship.

The sending unit 1703 is specifically configured to:
if the base station 1700 allows the third behavior mode to be configured, send information about the third behavior mode to the first terminal, so that the first terminal configures the third behavior mode.

Further, the sending unit 1703 is further specifically configured to:
if the base station 1700 does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter.

Alternatively, the sending unit 1703 is further specifically configured to:
if the base station 1700 does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
   or
send information about the second behavior mode and the first parameter to the first terminal, so that the first terminal performs a configuration according to the information about the second behavior mode and the first parameter.

Further, the obtaining unit 1701 is further configured to:
before the determining unit 1702 determines the preferred behavior mode corresponding to the first terminal according to the at least one type of identifier, obtain a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

The first parameter specifically includes:
a parameter determined according to the first time length or the second time length.

Further, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

Specifically, for the method for reporting terminal information by using the base station, reference may be made to description of Embodiment 1 and Embodiment 2, which is not described again in this embodiment of the present invention.

Based on the base station provided in the foregoing embodiment of the present invention, an obtaining unit of the base station obtains first information, and a determining unit determines, according to the first information, whether a current configuration of the base station can satisfy predetermined quality of service, so that when the current configuration of the base station cannot satisfy the predetermined quality of service, a current configuration parameter and a current configuration policy can be adjusted to improve the quality of service, where the first information includes an interruption delay or a first identifier or a second identifier, where the first identifier represents a timing relationship between a moment at which a first terminal triggers or sends a measurement report and a first timer, and the second identifier represents a timing relationship between a moment at which the first terminal initiates connection reestablishment and the first timer.

### Embodiment 5

This embodiment of the present invention provides a first terminal 1900, and specifically as shown in FIG. 19, the first terminal 1900 includes a processor 1901 and a sender 1902.

The processor 1901 is configured to obtain first information, where the first information includes an interruption delay or a first identifier or a second identifier, where the first identifier represents a timing relationship between a moment at which the first terminal 1900 triggers or sends a measurement report and a first timer, and the second identifier represents a timing relationship between a moment at which the first terminal 1900 initiates connection reestablishment and the first timer.

The sender 1902 is configured to send the first information obtained by the processor 1901 to a base station.

Further, the sender 1902 is specifically configured to:
send the first information to the base station, where the base station determines, according to the interruption delay or according to an interruption delay determined by the first identifier or according to an interruption delay determined by the second identifier, whether a current configuration of the base station can satisfy predetermined quality of service.

Further, the processor 1901 is further specifically configured to:
obtain configuration information of the first terminal 1900 before obtaining the first information, where the configuration information of the first terminal 1900 is determined by the base station according to a third identifier reported by a second terminal, the third identifier represents a timing relationship between a moment at which the second terminal triggers or sends a measurement report and the first timer, and the configuration information of the first terminal 1900 includes at least information about a behavior mode to be configured for the first terminal 1900.

The processor 1901 is further configured to:
perform a configuration according to the obtained configuration information of the first terminal 1900.

The processor 1901 is further specifically configured to:
if the first information is the interruption delay, obtain the interruption delay according to the behavior mode configured for the first terminal 1900.

The processor 1901 is further specifically configured to:
if the first information is the first identifier, obtain the first identifier according to a pre-stored correspondence between a timing relationship between a moment at which a terminal triggers or sends a measurement report and the first timer and the first identifier.

The processor 1901 is further specifically configured to:
if the first information is the second identifier, obtain the second identifier according to a pre-stored correspondence between a timing relationship between a moment at which a terminal initiates connection reestablishment and the first timer and the second identifier.

Further, the configuration information of the first terminal 1900 is further determined by the base station according to a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

Further, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

Further, the behavior mode to be configured for the first terminal 1900 specifically includes:
a first behavior mode, including:
   when the first relationship occurs, a timer length configured by the first terminal 1900 for the first timer is a first timer length, and when the first timer expires, the first terminal 1900 initiates connection reestablishment; and
   when the second relationship or the third relationship occurs, a timer length configured by the first terminal 1900 for the first timer is a second timer length, and when the first timer expires, the first terminal 1900 initiates connection reestablishment;
   or
a second behavior mode, including:
   a timer length configured by the first terminal 1900 for the first timer is a second timer length;
   when the second relationship occurs and when the first terminal 1900 triggers or sends the measurement report, the first terminal 1900 terminates the running first timer and initiates connection reestablishment; and
   when the first relationship or the third relationship occurs and when the first timer expires, the first terminal 1900 initiates connection reestablishment;
   or
a third behavior mode, including:
   when the first relationship occurs, a timer length configured by the first terminal 1900 for the first timer is a first timer length, and when the first timer expires, the first terminal 1900 initiates connection reestablishment;
   when the second relationship occurs, a timer length configured by the first terminal 1900 for the first timer is a second timer length, and when the first terminal 1900 triggers or sends the measurement report, the first terminal 1900 terminates the running first timer and initiates connection reestablishment; and
   when the third relationship occurs, a timer length configured by the first terminal 1900 for the first timer is the second timer length, and when the first timer expires, the first terminal 1900 initiates connection reestablishment;
   or
a fourth behavior mode, including:
   a timer length configured by the first terminal 1900 for the first timer is a second timer length; and
   when the first timer expires, the first terminal 1900 initiates connection reestablishment.

Further, if the behavior mode to be configured for the first terminal 1900 is the first behavior mode, the processor 1901 is further specifically configured to:
when the first relationship occurs, obtain that the first timer length of the first timer is the interruption delay; and
when the second relationship or the third relationship occurs, obtain that the second timer length of the first timer is the interruption delay.

Optionally, if the behavior mode to be configured for the first terminal 1900 is the second behavior mode, the processor 1901 is further specifically configured to:
when the second relationship occurs, obtain that a running time length value of the first timer is the interruption delay, where the running time length value of the first timer is a time length between the moment at which the first timer is started and the moment at which the first terminal 1900 triggers or sends the measurement report; and
when the first relationship or the third relationship occurs, obtain that the second timer length of the first timer is the interruption delay.

Optionally, if the behavior mode to be configured for the first terminal 1900 is the third behavior mode, the processor 1901 is further specifically configured to:
when the first relationship occurs, obtain that the first timer length of the first timer is the interruption delay;
when the second relationship occurs, obtain that a running time length value of the first timer is the interruption delay, where the running time length value of the first timer is a time length between the moment at which the first timer is started and the moment at which the first terminal 1900 triggers or sends the measurement report; and
when the third relationship occurs, obtain that the second timer length of the first timer is the interruption delay.

Optionally, if the behavior mode to be configured for the first terminal 1900 is the fourth behavior mode, the processor 1901 is further specifically configured to:
obtain that the second timer length of the first timer is the interruption delay.

Further, the timing relationship between the moment at which the first terminal 1900 initiates connection reestablishment and the first timer specifically includes:
a fourth relationship, where the fourth relationship is that the first terminal 1900 initiates connection reestablishment when the first timer expires, and a timer length currently configured for the first timer is the first timer length;
   or
a fifth relationship, where the fifth relationship is that the first terminal 1900 initiates connection reestablishment when the first timer expires, and a timer length currently configured for the first timer is the second timer length, where the first timer length and the second timer length are different;
   or
a sixth relationship, where the sixth relationship is that the first terminal 1900 initiates connection reestablishment during running of the first timer, and a timer length currently configured for the first timer is the second timer length.

Specifically, for the method for reporting terminal information by using the first terminal, reference may be made to description of Embodiment 1 and Embodiment 2, which is not described again in this embodiment of the present invention.

Based on the first terminal provided in this embodiment of the present invention, a processor of the first terminal obtains first information, and a sender sends the first information to a base station, so that the base station may obtain the first information, and determine, according to the first information, whether a current configuration of the base station can satisfy predetermined quality of service; further, if the current configuration of the base station cannot satisfy the predetermined quality of service, a current configuration parameter and a current configuration policy can be adjusted to improve the quality of service, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

### Embodiment 6

This embodiment of the present invention provides a base station, and specifically as shown in FIG. 20, the base station includes a processor 2001 and a memory 2002.

The processor is configured to obtain first information reported by a first terminal, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

The memory is configured to store the first information.

The processor is further configured to determine, according to the first information, whether a current configuration of the base station can satisfy predetermined quality of service.

Further, the processor is specifically configured to:
if the first information is the interruption delay, determine, according to the interruption delay, whether the current configuration of the base station can satisfy the predetermined quality of service.

The memory is further configured to store a correspondence between the first identifier and the interruption delay.

The processor is further specifically configured to:
if the first information is the first identifier, obtain the interruption delay corresponding to the first identifier according to the pre-stored correspondence between the first identifier and the interruption delay; and
determine, according to the interruption delay corresponding to the first identifier, whether the current configuration of the base station can satisfy the predetermined quality of service.

The memory is further configured to store a correspondence between the second identifier and the interruption delay.

The processor is further specifically configured to:
if the first information is the second identifier, obtain the interruption delay corresponding to the second identifier according to the pre-stored correspondence between the second identifier and the interruption delay; and
determine, according to the interruption delay corresponding to the second identifier, whether the current configuration of the base station can satisfy the predetermined quality of service.

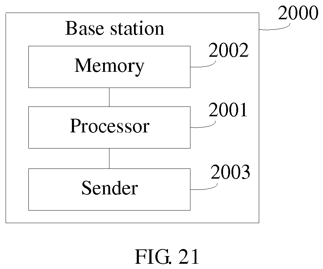

Further, as shown in FIG. 21, the base station further includes a sender 2003.

The processor is further configured to: before obtaining the first information reported by the first terminal, obtain at least one type of third identifier, where the third identifier represents a timing relationship between a moment at which a second terminal triggers or sends a measurement report and the first timer.

The processor is further configured to determine a preferred behavior mode corresponding to the first terminal according to the at least one type of obtained third identifier.

The sender is configured to: if the base station allows the preferred behavior mode to be configured, send information about the preferred behavior mode determined by the determining unit to the first terminal, so that the first terminal configures the preferred behavior mode.

The sender is further configured to: if the base station does not allow the preferred behavior mode to be configured, send information about a behavior mode that the base station allows to be configured and a first parameter to the first terminal, so that the first terminal performs a configuration according to the information about the behavior mode that the base station allows to be configured and the first parameter, where the first parameter is a parameter enabling the behavior mode that the base station allows to be configured to be the preferred behavior mode of the first terminal.

Further, the processor is specifically configured to:
count a quantity of third identifiers of each type of the at least one type of third identifier;
determine a fourth identifier according to the quantity of third identifiers of each type of the at least one type of identifier, where the fourth identifier is a type of identifier with a largest quantity of identifiers among the at least one type of third identifier; and
determine a preferred behavior mode corresponding to the fourth identifier according to the fourth identifier, and determine that the preferred behavior mode is the preferred behavior mode corresponding to the first terminal.

Further, the timing relationship between the moment at which the first/second terminal triggers or sends the measurement report and the first timer includes:
a first relationship, where the first relationship is that the first/second terminal triggers or sends the measurement report before the first timer is started;
   or
a second relationship, where the second relationship is that the first/second terminal triggers or sends the measurement report during running of the first timer;
   or
a third relationship, where the third relationship is that the first/second terminal still does not trigger or send the measurement report when the first timer expires.

Further, the preferred behavior mode corresponding to the first terminal specifically includes:
a first behavior mode, including:
   when the first relationship occurs, a timer length configured by the first terminal for the first timer is a first timer length, and when the first timer expires, the first terminal initiates connection reestablishment; and
   when the second relationship or the third relationship occurs, a timer length configured by the first terminal for the first timer is a second timer length, and when the first timer expires, the first terminal initiates connection reestablishment;
   or
a second behavior mode, including:
   a timer length configured by the first terminal for the first timer is a second timer length;
   when the second relationship occurs and when the first terminal triggers or sends the measurement report, the first terminal terminates the running first timer and initiates connection reestablishment; and
   when the first relationship or the third relationship occurs and when the first timer expires, the first terminal initiates connection reestablishment;
   or
a third behavior mode, including:
   when the first relationship occurs, a timer length configured by the first terminal for the first timer is a first timer length, and when the first timer expires, the first terminal initiates connection reestablishment;
   when the second relationship occurs, a timer length configured by the first terminal for the first timer is a second timer length, and when the first terminal triggers or sends the measurement report, the first terminal terminates the running first timer and initiates connection reestablishment; and
   when the third relationship occurs, a timer length configured by the first terminal for the first timer is the second timer length, and when the first timer expires, the first terminal initiates connection reestablishment;
   or
a fourth behavior mode, including:
   a timer length configured by the first terminal for the first timer is a second timer length; and
   when the first timer expires, the first terminal initiates connection reestablishment.

Further, the fourth identifier specifically represents the first relationship.

The processor is specifically configured to:
determine, according to the fourth identifier, that the preferred behavior mode corresponding to the fourth identifier is the first behavior mode or the third behavior mode.

The sender is specifically configured to:
if the base station allows the first behavior mode to be configured, send information about the first behavior mode to the first terminal, so that the first terminal configures the first behavior mode; or
if the base station allows the third behavior mode to be configured, send information about the third behavior mode to the first terminal, so that the first terminal configures the third behavior mode.

Further, the sender is further specifically configured to:
if the base station does not allow the first behavior mode to be configured, and does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
   or
send information about the second behavior mode and the first parameter to the first terminal, so that the first terminal performs a configuration according to the information about the second behavior mode and the first parameter.

Optionally, the fourth identifier specifically represents the second relationship.

The processor is specifically configured to:
determine, according to the fourth identifier, that the preferred behavior mode corresponding to the fourth identifier is the second behavior mode or the third behavior mode.

The sender is specifically configured to:
if the base station allows the second behavior mode to be configured, send information about the second behavior mode to the first terminal, so that the first terminal configures the second behavior mode; or
if the base station allows the third behavior mode to be configured, send information about the third behavior mode to the first terminal, so that the first terminal configures the third behavior mode.

Further, the sender is further specifically configured to:
if the base station does not allow the second behavior mode to be configured, and does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter.

Optionally, the fourth identifier specifically represents the third relationship.

The processor is specifically configured to:
if a quantity of fourth identifiers is not greater than a sum of a quantity of fifth identifiers and a quantity of sixth identifiers, determine that the preferred behavior mode corresponding to the fourth identifier is the third behavior mode, where one identifier of the fifth identifier and the sixth identifier is corresponding to the second relationship, and the other identifier is corresponding to the first relationship.

The sender is specifically configured to:
if the base station allows the third behavior mode to be configured, send information about the third behavior mode to the first terminal, so that the first terminal configures the third behavior mode.

Further, the sender is further specifically configured to:
if the base station does not allow the third behavior mode to be configured, but allows the fourth behavior mode and the first behavior mode to be configured, send information about the fourth behavior mode and the first parameter to the first terminal, so that the first terminal performs a configuration according to the information about the fourth behavior mode and the first parameter;
   or
send information about the first behavior mode and the first parameter to the first terminal, so that the first terminal performs a configuration according to the information about the first behavior mode and the first parameter.

Alternatively, the sender is further specifically configured to:
if the base station does not allow the third behavior mode to be configured, but allows the fourth behavior mode and the second behavior mode to be configured, send information about the fourth behavior mode and the first parameter to the first terminal, so that the first terminal performs a configuration according to the information about the fourth behavior mode and the first parameter;
   or
send information about the second behavior mode and the first parameter to the first terminal, so that the first terminal performs a configuration according to the information about the second behavior mode and the first parameter.

Further, the processor is further configured to:
before determining the preferred behavior mode corresponding to the first terminal according to the at least one type of identifier, obtain a first time length or a second time length reported by the second terminal, where the first time length is a time length between the moment at which the second terminal triggers or sends the measurement report and a moment at which the first timer is started, and the second time length is a time length between the moment at which the second terminal triggers or sends the measurement report and a moment at which the first timer expires.

The first parameter specifically includes:
a parameter determined according to the first time length or the second time length.

Further, the timing relationship between the moment at which the first terminal initiates connection reestablishment and the first timer specifically includes:
a fourth relationship, where the fourth relationship is that the first terminal initiates connection reestablishment when the first timer expires, and a timer length currently configured for the first timer is the first timer length;
   or
a fifth relationship, where the fifth relationship is that the first terminal initiates connection reestablishment when the first timer expires, and a timer length currently configured for the first timer is the second timer length, where the first timer length and the second timer length are different;
   or
a sixth relationship, where the sixth relationship is that the first terminal initiates connection reestablishment during running of the first timer, and a timer length currently configured for the first timer is the second timer length.

Specifically, for the method for reporting terminal information by using the base station, reference may be made to description of Embodiment 1 and Embodiment 2, which is not described again in this embodiment of the present invention.

Based on the base station provided in the foregoing embodiment of the present invention, a processor of the base station obtains first information, and determines, according to the first information, whether a current configuration of the base station can satisfy predetermined quality of service, so that when the current configuration of the base station cannot satisfy the predetermined quality of service, a current configuration parameter and a current configuration policy can be adjusted to improve the quality of service, where the first information includes an interruption delay or a first identifier or a second identifier, where the first identifier represents a timing relationship between a moment at which the first terminal triggers or sends a measurement report and a first timer, and the second identifier represents a timing relationship between a moment at which the first terminal initiates connection reestablishment and the first timer.

It may be clearly understood by a person skilled in the art that, for the purpose of convenient and brief description, division of the foregoing functional modules is taken as an example for illustrating the apparatus described above. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) or a processor to perform all or some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A terminal information reporting method, wherein the method comprises:
obtaining (101), by a first terminal, first information, wherein the first information comprises a first identifier which represents a timing relationship between a moment at which the first terminal triggers a measurement report and a timer T310 of the first terminal;
**characterized by**
sending (102), by the first terminal, the first information to a base station;
wherein the timing relationship comprises that the first terminal triggers the measurement report during running of the timer T310 of the first terminal.

2. The method according to claim 1, wherein the first information is used for the base station to determine, according to an interruption delay determined by the first identifier, whether a current configuration of the base station for the first terminal can satisfy predetermined quality of service.

3. The method according to claim 1 or 2, wherein before the obtaining, by the first terminal, first information, the method further comprises:
obtaining configuration information of the first terminal, wherein the configuration information of the first terminal is determined by the base station according to a timing relationship between a moment at which a second terminal triggers a measurement report and a timer T310 of the second terminal, and the configuration information of the first terminal comprises at least information about a behavior mode to be configured for the first terminal; and
performing configuration according to the configuration information of the first terminal.

4. The method according to claim 3, wherein the configuration information of the first terminal is further determined by the base station according to a first time length or a second time length reported by the second terminal, wherein the first time length is a time length between the moment at which the second terminal triggers the measurement report and a moment at which the timer T310 of the second terminal is started, and the second time length is a time length between the moment at which the second terminal triggers the measurement report and a moment at which the timer T310 of the second terminal expires.

5. A terminal information processing method, **characterized by**
obtaining (501), by a base station, first information reported by a first terminal, wherein the first information comprises a first identifier representing a timing relationship between a moment at which the first terminal triggers a measurement report and a timer T310 of the first terminal; and
determining (502), according to the first information, whether a current configuration of the base station for the first terminal satisfies predetermined quality of service;
wherein the timing relationship comprises that the first terminal triggers the measurement report during running of the timer T310 of the first terminal.

6. The method according to claim 5, wherein the determining, according to the first information, whether a current configuration of the base station for the first terminal satisfies predetermined quality of service comprises:
obtaining an interruption delay corresponding to the first identifier according to a pre-stored correspondence between the first identifier and the interruption delay; and
determining, according to the interruption delay corresponding to the first identifier, whether the current configuration of the base station satisfies the predetermined quality of service.

7. A first terminal (1500), comprising an obtaining unit (1501) and a sending unit (1502); wherein
the obtaining unit (1501) is configured to obtain first information, wherein the first information comprises a first identifier representing a timing relationship between a moment at which the first terminal triggers a measurement report and a timer T310 of the first terminal;
**characterized in that**,
the sending unit (1502) is configured to send the first information obtained by the obtaining unit to a base station;
wherein the timing relationship comprises that the first terminal triggers the measurement report during running of the timer T310 of the first terminal.

8. The first terminal according to claim 7, wherein the first information is used for the base station to determine, according to an interruption delay determined by the first identifier, whether a current configuration of the base station satisfies predetermined quality of service.

9. The first terminal according to claim 7 or 8,
wherein the obtaining unit is further configured to:
obtain configuration information of the first terminal before obtaining the first information, wherein the configuration information of the first terminal is determined by the base station according to a third identifier reported by a second terminal, the third identifier represents a timing relationship between a moment at which the second terminal triggers a measurement report and a timer T310 of the second terminal, and the configuration information of the first terminal comprises at least information about a behavior mode to be configured for the first terminal;
wherein the first terminal further comprises a configuration unit (1503) configured to perform configuration according to the configuration information of the first terminal obtained by the obtaining unit.

10. The first terminal according to claim 9, wherein the configuration information of the first terminal is further determined by the base station according to a first time length or a second time length reported by the second terminal, wherein the first time length is a time length between the moment at which the second terminal triggers the measurement report and a moment at which the timer T310 of the second terminal is started, and the second time length is a time length between the moment at which the second terminal triggers the measurement report and a moment at which the timer T310 of the first terminal expires.

11. A base station (1700), comprising an obtaining unit (1701) and a determining unit (1702) **characterized in that**,
the obtaining unit is configured to obtain first information reported by a first terminal, wherein the first information comprises a first identifier representing a timing relationship between a moment at which the first terminal triggers or sends a measurement report and a timer T310 of the first terminal; and
the determining unit is configured to determine, according to the first information obtained by the obtaining unit, whether a current configuration of the base station satisfies predetermined quality of service;
wherein the timing relationship comprises that the first terminal triggers the measurement report during running of the timer T310 of the first terminal.

## Patentansprüche

1. Endgerätinformationsmeldungsverfahren, wobei das Verfahren umfasst:
Erhalten (101) durch ein erstes Endgerät erster Informationen, wobei die ersten Informationen eine erste Kennung umfassen, die ein zeitliches Verhältnis zwischen einem Augenblick darstellt, in dem das erste Endgerät eine Messungsmeldung auslöst und einem Zeitgeber T310 des ersten Endgeräts;
**gekennzeichnet durch**:
Senden (102) durch das erste Endgerät der ersten Informationen zu einer Basisstation;
wobei das zeitliche Verhältnis umfasst, dass das erste Endgerät die Messungsmeldung bei Laufen des Zeitgebers T310 des ersten Endgeräts auslöst.

2. Verfahren nach Anspruch 1, wobei die ersten Informationen für die Basisstation benutzt werden, um gemäß einer durch die erste Kennung bestimmten Unterbrechungsverzögerung zu bestimmen ob eine aktuelle Einrichtung der Basisstation für das erste Endgerät einer vorbestimmten Dienstgüte genügen kann.

3. Verfahren nach Anspruch 1 oder 2, wobei vor dem Erhalten durch das erste Endgerät erster Informationen das Verfahren weiterhin umfasst:
Erhalten von Einrichtungsinformationen des ersten Endgeräts, wobei die Einrichtungsinformationen des ersten Endgeräts durch die Basisstation gemäß einem zeitlichen Verhältnis zwischen einem Augenblick bestimmt wird, in dem ein zweites Endgerät eine Messungsmeldung auslöst und einem Zeitgeber T310 des zweiten Endgeräts, und die Einrichtungsinformationen des ersten Endgeräts wenigstens Informationen über einen für das erste Endgerät einzurichtenden Verhaltensmodus umfassen; und
Durchführen der Einrichtung gemäß den Einrichtungsinformationen des ersten Endgeräts.

4. Verfahren nach Anspruch 3, wobei die Einrichtungsinformationen des ersten Endgeräts weiterhin durch die Basisstation gemäß einer ersten Zeitlänge oder einer zweiten durch das zweite Endgerät gemeldeten Zeitlänge bestimmt wird, wobei die erste Zeitlänge eine Zeitlänge zwischen dem Augenblick ist, in dem das zweite Endgerät die Messungsmeldung auslöst und einem Augenblick, in dem der Zeitgeber T310 des zweiten Endgeräts gestartet wird und die zweite Zeitlänge eine Zeitlänge zwischen dem Augenblick ist, in dem das zweite Endgerät die Messungsmeldung auslöst und einem Augenblick, in dem der Zeitgeber T310 des zweiten Endgeräts abläuft.

5. Endgerätinformationsverarbeitungsverfahren **gekennzeichnet durch**:
Erhalten (501) durch eine Basisstation von durch ein erstes Endgerät gemeldeten ersten Informationen, wobei die ersten Informationen eine ein zeitliches Verhältnis zwischen einem Augenblick, in dem das erste Endgerät eine Messungsmeldung auslöst und einem Zeitgeber T310 des ersten Endgeräts darstellende Kennung umfasst; und
Bestimmen (502) gemäß den ersten Informationen, ob eine aktuelle Einrichtung der Basisstation für das erste Endgerät einer vorbestimmten Dienstgüte genügt;
wobei das zeitliche Verhältnis umfasst, dass das erste Endgerät die Messungsmeldung bei Laufen des Zeitgebers T310 des ersten Endgeräts auslöst.

6. Verfahren nach Anspruch 5, wobei das Bestimmen gemäß den ersten Informationen, ob eine aktuelle Einrichtung der Basisstation über das erste Endgerät einer vorbestimmten Dienstgüte genügt, umfasst:
Erhalten einer Unterbrechungsverzögerung entsprechend der ersten Kennung gemäß einer vorgespeicherten Entsprechung zwischen der ersten Kennung und der Unterbrechungsverzögerung; und
Bestimmen gemäß der Unterbrechungsverzögerung entsprechend der ersten Kennung, ob die aktuelle Einrichtung der Basisstation der vorbestimmten Dienstgüte genügt.

7. Erstes Endgerät (1500) umfassend eine Erhaltungseinheit (1501) und eine Sendeeinheit (1502); wobei
die Erhaltungseinheit (1501) eingerichtet ist zum Erhalten erster Informationen, wobei die ersten Informationen eine ein zeitliches Verhältnis zwischen einem Augenblick, in dem das erste Endgerät eine Messungsmeldung auslöst und einem Zeitgeber T310 des ersten Endgeräts darstellende erste Kennung umfassen;
**dadurch gekennzeichnet, dass**
die Sendeeinheit (1502) eingerichtet ist zum Senden der durch die Erhaltungseinheit erhaltenen ersten Informationen zu einer Basisstation,
wobei das zeitliche Verhältnis umfasst, dass das erste Endgerät die Messungsmeldung bei Laufen des Zeitgebers T310 des ersten Endgeräts auslöst.

8. Erstes Endgerät nach Anspruch 7, wobei die ersten Informationen für die Basisstation benutzt werden, zum Bestimmen gemäß einer durch die erste Kennung bestimmten Unterbrechungsverzögerung, ob eine aktuelle Einrichtung der Basisstation einer vorbestimmten Dienstgüte genügt.

9. Erstes Endgerät nach Anspruch 7 oder 8,
wobei die Erhaltungseinheit weiterhin eingerichtet ist zum:
Erhalten von Einrichtungsinformationen des ersten Endgeräts vor Erhalten der ersten Informationen, wobei die Einrichtungsinformationen des ersten Endgeräts durch die Basisstation gemäß einer durch ein zweites Endgerät gemeldeten dritten Kennung bestimmt werden, die dritte Kennung ein zeitliches Verhältnis zwischen einem Augenblick darstellt, in dem das zweite Endgerät eine Messungsmeldung auslöst und einem Zeitgeber T310 des zweiten Endgeräts, und die Einrichtungsinformationen des ersten Endgeräts wenigstens Informationen über einen für das erste Endgerät einzurichtenden Verhaltensmodus umfassen;
wobei das erste Endgerät weiterhin eine Einrichtungseinheit (1503), eingerichtet zum Durchführen einer Einrichtung gemäß den durch die Erhaltungseinheit erhaltenen Einrichtungsinformationen des ersten Endgeräts, umfasst.

10. Erstes Endgerät nach Anspruch 9, wobei die Einrichtungsinformationen des ersten Endgeräts weiterhin durch die Basisstation gemäß einer ersten Zeitlänge oder einer durch das zweite Endgerät gemeldeten zweiten Zeitlänge bestimmt wird, wobei die erste Zeitlänge eine Zeitlänge zwischen dem Augenblick ist, in dem das zweite Endgerät die Messungsmeldung auslöst und einem Augenblick, in dem der Zeitgeber T310 des zweiten Endgeräts gestartet wird, und die zweite Zeitlänge eine Zeitlänge zwischen dem Augenblick ist, in dem das zweite Endgerät die Messungsmeldung auslöst und einem Augenblick, in dem der Zeitgeber T310 des ersten Endgeräts abläuft.

11. Basisstation (1700) umfassend eine Erhaltungseinheit (1701) und eine Bestimmungseinheit (1702), **dadurch gekennzeichnet, dass**
die Erhaltungseinheit eingerichtet ist, durch ein erstes Endgerät gemeldete erste Informationen zu erhalten, wobei die ersten Informationen eine erste Kennung umfassen, die ein zeitliches Verhältnis zwischen einem Augenblick darstellt, in dem das erste Endgerät eine Messungsmeldung auslöst oder sendet und einem Zeitgeber T310 des ersten Endgeräts; und
die Bestimmungseinheit eingerichtet ist zum Bestimmen gemäß der durch die Erhaltungseinheit erhaltenen ersten Information, ob eine aktuelle Einrichtung der Basisstation einer vorbestimmten Dienstgüte genügt;
wobei das zeitliche Verhältnis umfasst, dass das erste Endgerät die Messungsmeldung bei Laufen des Zeitgebers T310 des ersten Endgeräts auslöst.

## Revendications

1. Procédé de rapport d'informations de terminal, lequel procédé comprend :
l'obtention (101), par un premier terminal, de premières informations, lesquelles premières informations comprennent un premier identifiant qui représente une relation temporelle entre un moment où le premier terminal déclenche un rapport de mesure et un temporisateur T310 du premier terminal ;
**caractérisé par** :
l'envoi (102), par le premier terminal, des premières informations à une station de base ;
la relation temporelle comprenant le fait que le premier terminal déclenche le rapport de mesure pendant le fonctionnement du temporisateur T310 du premier terminal.

2. Procédé selon la revendication 1, dans lequel les premières informations sont utilisées par la station de base pour déterminer, en fonction d'un délai d'interruption déterminé par le premier identifiant, si une configuration courante de la station de base pour le premier terminal peut ou non satisfaire à une qualité de service prédéterminée.

3. Procédé selon la revendication 1 ou 2, dans lequel, avant l'obtention, par le premier terminal, de premières informations, le procédé comprend en outre :
l'obtention d'informations de configuration du premier terminal, où les informations de configuration du premier terminal sont déterminées par la station de base en fonction d'une relation temporelle entre un moment où un deuxième terminal déclenche un rapport de mesure et un temporisateur T310 du deuxième terminal, et les informations de configuration du premier terminal comprennent au moins des informations concernant un mode de comportement à configurer pour le premier terminal ; et
l'exécution d'une configuration conformément aux informations de configuration du premier terminal.

4. Procédé selon la revendication 3, dans lequel les informations de configuration du premier terminal sont en outre déterminées par la station de base en fonction d'une première durée ou d'une deuxième durée rapportée par le deuxième terminal, la première durée étant une durée entre le moment où le deuxième terminal déclenche le rapport de mesure et un moment où le temporisateur T310 du deuxième terminal est démarré, et la deuxième durée étant une durée entre le moment où le deuxième terminal déclenche le rapport de mesure et un moment où le temporisateur T310 du deuxième terminal arrive à expiration.

5. Procédé de traitement d'informations de terminal, **caractérisé par** :
l'obtention (501), par une station de base, de premières informations rapportées par un premier terminal, lesquelles premières informations comprennent un premier identifiant représentant une relation temporelle entre un moment où le premier terminal déclenche un rapport de mesure et un temporisateur T310 du premier terminal ; et
la détermination (502), en fonction des premières informations, du fait qu'une configuration courante de la station de base pour le premier terminal satisfait ou non à une qualité de service prédéterminée ;
la relation temporelle comprenant le fait que le premier terminal déclenche le rapport de mesure pendant le fonctionnement du temporisateur T310 du premier terminal.

6. Procédé selon la revendication 5, dans lequel la détermination, en fonction des premières informations, du fait qu'une configuration courante de la station de base pour le premier terminal satisfait ou non à une qualité de service prédéterminée comprend :
l'obtention d'un délai d'interruption correspondant au premier identifiant en fonction d'une correspondance préalablement stockée entre le premier identifiant et le délai d'interruption ; et
la détermination, en fonction du délai d'interruption correspondant au premier identifiant, du fait que la configuration courante de la station de base satisfait à la qualité de service prédéterminée.

7. Premier terminal (1500), comprenant une unité d'obtention (1501) et une unité d'envoi (1502) ; dans lequel
l'unité d'obtention (1501) est configurée pour obtenir des premières informations, lesquelles premières informations comprennent un premier identifiant qui représente une relation temporelle entre un moment où le premier terminal déclenche un rapport de mesure et un temporisateur T310 du premier terminal ;
**caractérisé en ce que**
l'unité d'envoi (1502) est configurée pour envoyer les premières informations obtenues par l'unité d'obtention à une station de base ;
la relation temporelle comprenant le fait que le premier terminal déclenche le rapport de mesure pendant le fonctionnement du temporisateur T310 du premier terminal.

8. Premier terminal selon la revendication 7, dans lequel les premières informations sont utilisées par la station de base pour déterminer, en fonction d'un délai d'interruption déterminé par le premier identifiant, si une configuration courante de la station de base satisfait ou non à une qualité de service prédéterminée.

9. Premier terminal selon la revendication 7 ou 8, dans lequel l'unité d'obtention est en outre configurée pour :
obtenir des informations de configuration du premier terminal avant l'obtention des premières informations, où les informations de configuration du premier terminal sont déterminées par la station de base en fonction d'un troisième identifiant rapporté par un deuxième terminal, le troisième identifiant représentant une relation temporelle entre un moment où le deuxième terminal déclenche un rapport de mesure et un temporisateur T310 du deuxième terminal, et les informations de configuration du premier terminal comprennent au moins des informations concernant un mode de comportement à configurer pour le premier terminal ;
le premier terminal comprenant en outre une unité de configuration (1503) configurée pour exécuter une configuration conformément aux informations de configuration du premier terminal obtenues par l'unité d'obtention.

10. Premier terminal selon la revendication 9, dans lequel les informations de configuration du premier terminal sont en outre déterminées par la station de base en fonction d'une première durée ou d'une deuxième durée rapportée par le deuxième terminal, la première durée étant une durée entre le moment où le deuxième terminal déclenche le rapport de mesure et un moment où le temporisateur T310 du deuxième terminal est démarré, et la deuxième durée étant une durée entre le moment où le deuxième terminal déclenche le rapport de mesure et un moment où le temporisateur T310 du premier terminal arrive à expiration.

11. Station de base (1700), comprenant une unité d'obtention (1701) et une unité de détermination (1702), **caractérisée en ce que** :
l'unité d'obtention est configurée pour obtenir des premières informations rapportées par un premier terminal, lesquelles premières informations comprennent un premier identifiant représentant une relation temporelle entre un moment où le premier terminal déclenche ou envoie un rapport de mesure et un temporisateur T310 du premier terminal ; et
l'unité de détermination est configurée pour déterminer, en fonction des premières informations obtenues par l'unité d'obtention, si une configuration courante de la station de base satisfait ou non à une qualité de service prédéterminée ;
la relation temporelle comprenant le fait que le premier terminal déclenche le rapport de mesure pendant le fonctionnement du temporisateur T310 du premier terminal.
